# FASCICULE DE BREVET EUROPEEN

(11) **EP 3 790 166 B1**
(45) Date de publication et mention de la délivrance du brevet: **13.07.2022**
(21) Numéro de dépôt: 20194241.4
(22) Date de dépôt: 03.09.2020
(51) Int. Cl.: H02K 1/14, H02K 1/34, H02K 33/16, H02K 1/17, H02K 11/215

(54) **ACTIONNEUR MAGNÉTIQUE ET SYSTÈME MÉCATRONIQUE**
MAGNETISCHES STELLGLIED UND MECHATRONISCHES SYSTEM
MAGNETIC ACTUATOR AND MECHATRONIC SYSTEM

(30) Priorité: 03.09.2019 FR 1909648
(43) Date de publication de la demande: 10.03.2021
(73) Titulaire: Cedrat Technologies, 38240 Meylan (FR)
(72) Inventeur: CLAEYSSEN, Frank, 38240 Meylan (FR); AIGOUY, Gérald, 73110 La Rochette (FR); BENOIT, Kevin, 38660 LE Touvet (FR)
(74) Mandataire: Talbot, Alexandre

(56) Documents cités:
- FR-A1- 2 929 753
- US-A- 3 624 574
- US-A- 4 371 782
- US-A1- 2016 077 331

## Description

### Domaine technique

L'invention concerne un actionneur magnétique.

### Technique antérieure

Dans les dispositifs optiques, les mécanismes magnétiques de pointage utilisent des actionneurs magnétiques afin d'entraîner en translation une partie mobile. La partie mobile est reliée à une pièce d'interface du système optique et en particulier le miroir. Il est connu des mécanismes magnétiques de pointage optique qui exploitent quatre actionneurs magnétiques indépendants. Les actionneurs magnétiques génèrent des translations de la partie mobile. Les actionneurs magnétiques peuvent être couplés ensemble, par exemple de type push-pull pour générer une rotation de la partie mobile. La partie mobile est reliée à la partie fixe via un guidage flexible. Les actionneurs magnétiques utilisés dans ces mécanismes appartiennent à deux grandes familles : les actionneurs à aimants mobiles et les actionneurs à fer mobile.

Des travaux présentent des mécanismes ne possédant pas quatre actionneurs indépendants mais un ensemble statorique unique et un ensemble mobile. Un tel enseignement peut être trouvé dans la publication de Yongjun Long et al. « Modeling and Analysis of a Novel Two-Axis Rotary Electromagnetic Actuator for Fast Steering Mirror » Journal ofMagnetics 19(2), 130-139 (2014) ainsi que dans la publication de Yongjun Long et al « Design of a Moving-magnet Electromagnetic Actuator for Fast Steering Mirror through Finite Element Simulation Method » Journal of Magnetics 19(3), 300-308 (2014).

Cependant, il ressort que ces derniers mécanismes procurent des déplacements limités avec des entrefers placés entre l'ensemble mobile et deux parties du circuit magnétique fixe. De plus, les forces magnétiques sont obtenues par variation de réluctance normale, en augmentant ou en réduisant les épaisseurs des entrefers. Pour cette raison, les forces magnétiques que subit l'ensemble mobile peuvent amener à un « collage » ou des impacts de l'ensemble mobile sur la partie fixe, préjudiciable au guidage et au système complet.

Pour réduire ce risque, dans la publication « Modeling and Analysis of a Novel Two-Axis Rotary Electromagnetic Actuator for Fast Steering Mirror », il est nécessaire d'installer l'élément mobile sur une tige montée en flexion pour guider les déplacements de l'élément mobile. La raideur de flexion de la tige doit être assez élevée pour éviter le collage ce qui est très préjudiciable pour la consommation électrique. Une telle configuration implique la réalisation d'aimants dont les formes ne sont pas immédiatement compatibles avec leurs besoins de magnétisation et en particulier la direction de polarisation ce qui implique des coûts de réalisation importants. Une telle configuration n'est pas facilement réalisable, ni utilisable.

La publication « Design of a Moving-magnet Electromagnetic Actuator for Fast Steering Mirror through Finite Element Simulation Method » propose alternativement de monter des aimants permanents sur le disque mobile destiné à supporter le miroir. Une telle configuration alourdit le disque mobile. De plus, le flux dynamique de la bobine traverse les aimants permanents ce qui augmente la consommation électrique. Enfin, ce mécanisme utilise des forces magnétiques par variation de réluctance normale, qui peut conduire à des collages ou des impacts de la partie mobile sur le stator. Cette configuration utilise aussi une tige montée en flexion pour son guidage, qui pénalise aussi la consommation.

Les documents US2016/077331 A1, US362474 A, FR2929753 Al divulguaient des actionneurs magnétiques à fer mobile polarisé par un aimant ou/et une bobine externe.

Il ressort des configurations de l'art antérieur que des risques de collage entre l'élément mobile et les moyens d'actionnement sont à prévoir ce qui impose des mécanismes de guidage relativement rigides et donc des consommations électriques importantes.

### Objet de l'invention

Un objet de l'invention consiste à prévoir un actionneur magnétique qui est plus facile à réaliser et dont la consommation électrique pour obtenir le déplacement de l'armature mobile est diminuée. L'actionneur est avantageusement destiné à former une partie d'un dispositif de pointage, préférentiellement un dispositif de pointage optique. A cet effet, l'actionneur magnétique comporte un stator et une armature mobile montée pivotante par rapport au stator.

Le stator est muni :
- d'une culasse statorique réalisée en matériau magnétique et comportant des première et deuxième ailes reliées par un support,
- d'un premier aimant monté sur une extrémité de la première aile,
- d'un deuxième aimant monté sur une extrémité de la deuxième aile, les premier et deuxième aimants étant à aimantation axiale avec une direction d'aimantation dirigée selon une première direction, les premier et deuxième aimants étant alignés selon une deuxième direction perpendiculaire à la première direction,
- au moins une première bobine montée autour de la première aile entre le support et le premier aimant.

L'armature mobile est disposée entre les premier et deuxième aimants selon la deuxième direction et possède des dimensions selon la deuxième direction et selon une troisième direction chacune supérieure à la dimension de l'armature mobile selon la première direction, la troisième direction étant perpendiculaire aux première et deuxième directions. L'armature mobile définit un premier entrefer avec l'extrémité de la première aile et le premier aimant et un deuxième entrefer avec l'extrémité de la deuxième aile et le deuxième aimant, et possède des première et deuxième extrémités opposées selon la deuxième direction.

Un guide relie mécaniquement l'armature mobile avec le stator, le guide étant configuré pour autoriser le pivotement de l'armature mobile autour d'un premier axe de rotation parallèle à la troisième direction, et empêcher le déplacement de l'armature mobile selon la deuxième direction vers le premier aimant ou le deuxième aimant.

Le premier aimant est couplé magnétiquement avec la première extrémité de l'armature mobile et la première aile pour former un premier circuit magnétique statique. Le deuxième aimant est couplé magnétiquement avec la deuxième extrémité de l'armature mobile et la deuxième aile pour former un deuxième circuit magnétique statique. La première bobine est couplée magnétiquement aux première et deuxième extrémités de l'armature mobile, aux première et deuxième ailes et au support pour former un premier circuit magnétique dynamique. Préférentiellement, la première aile et la deuxième aile s'étendent principalement selon la première direction depuis le support et les premier et deuxième aimants sont disposés dans le prolongement des première et deuxième ailes selon la première direction.

Selon un développement de l'invention, le rapport entre l'épaisseur des premier et deuxième aimants et l'épaisseur de l'armature mobile est compris entre 0,8 et 1,2, l'épaisseur étant mesurée selon la première direction.

De manière avantageuse, un plan médian des premier et deuxième aimants selon la première direction est un plan médian de l'armature mobile.

Dans un développement, des premier et deuxième pôles en matériau magnétique sont respectivement placés sur les premier et deuxième aimants, les premier et deuxième pôles étant séparés des première et deuxième ailes par les premier et deuxième aimants. Avantageusement, la distance minimale entre le premier aimant et l'armature mobile est supérieure ou égale à la distance minimale entre la première aile et l'armature mobile.

Dans une configuration préférentielle, une deuxième bobine est montée autour de la deuxième aile entre le support et le deuxième aimant, la deuxième bobine faisant partie du premier circuit magnétique dynamique.

Dans un autre développement, le guide est fixé au stator par au moins un premier point de fixation et est fixé à l'armature mobile par une pluralité de deuxièmes points de fixation. Le guide comporte un corps définissant des fentes traversantes selon la première direction, les fentes traversantes se présentent sous la forme de spirales dirigées vers le au moins un premier point de fixation. Les fentes traversantes séparent le au moins un premier point de fixation et la pluralité de deuxièmes points de fixation selon la deuxième direction et/ou la troisième direction. Préférentiellement, l'actionneur magnétique comporte des troisième et quatrième aimants montés respectivement sur des troisième et quatrième ailes de la culasse statorique, les troisième et quatrième aimants étant à aimantation axiale avec une direction d'aimantation parallèle à la première direction et étant alignés selon la troisième direction. L'armature mobile possède des troisième et quatrième extrémités opposées selon la troisième direction et est séparée des extrémités des troisième et quatrième ailes et des troisième et quatrième aimants par un troisième et un quatrième entrefers. L'armature mobile est disposée entre les troisième et quatrième aimants selon la troisième direction.

Le troisième aimant forme un troisième circuit magnétique statique avec une troisième extrémité de l'armature mobile et la troisième aile. Le quatrième aimant forme un quatrième circuit magnétique statique avec une quatrième extrémité de l'armature mobile et la quatrième aile. Une bobine additionnelle forme un circuit magnétique dynamique additionnel avec les troisième et quatrième extrémités, les troisième et quatrième ailes et le support.

Dans une configuration particulière, l'aimantation des premier et deuxième aimants est selon un premier sens d'aimantation et l'aimantation des troisième et quatrième aimants est selon un deuxième sens d'aimantation opposé au premier sens d'aimantation. Alternativement, les premier, deuxième, troisième et quatrième aimants possèdent un même sens d'aimantation. Dans un mode de réalisation particulier, l'armature mobile possède au moins une cible coopérant avec au moins une sonde de capteur de courant de Foucault pour détecter le débattement de l'armature mobile autour du premier axe de rotation, la au moins une cible et la au moins une sonde de capteur de courant de Foucault étant séparées de la au moins une première bobine et du support par l'armature mobile.

De manière avantageuse, l'armature mobile possède deux paires de cibles montées fixe sur l'armature mobile alignées respectivement selon la première direction et selon la deuxième direction. Le stator comporte deux paires de sondes de capteurs de courant de Foucault pour détecter la rotation de l'armature magnétique autour du premier axe de rotation et du deuxième axe de rotation par mode différentiel. Les deux paires de sondes de capteurs de courant de Foucault sont formées par des serpentins en matériau conducteur sur un circuit imprimé électronique annulaire.

Dans un autre développement, une charge est fixée sur une première face principale de l'armature mobile, la charge étant séparée de la première bobine et des deuxième, troisième et quatrième bobines le cas échéant par l'armature mobile.

Préférentiellement, la charge est reliée mécaniquement à l'armature mobile au moyen d'un support de charge, la charge étant fixée au support de charge par des premiers points de fixation, le support de charge étant relié mécaniquement au stator par des deuxièmes points de fixation. Le support de charge est formé par une plaque définissant quatre premières fentes traversantes selon la première direction, les premières fentes s'étendant depuis la périphérie du support de charge vers le centre du support de charge selon une première trajectoire courbe avec une première concavité pour définir quatre zones, et définissant au moins des troisièmes fentes s'étendant en arc de cercle autour du centre à partir des premières fentes.

Le support de charge comporte quatre deuxièmes fentes traversantes selon la première direction. Les deuxièmes fentes s'étendent depuis la périphérie du support de charge vers les premières fentes selon une deuxième trajectoire courbe avec la première concavité. Chaque zone comporte une deuxième fente pour définir deux zones élémentaires dans chaque zone, les premiers et les deuxièmes points de fixation étant disposés en alternance. Un premier point de fixation ou un deuxième point de fixation sépare une première fente et une deuxième fente consécutive, les troisièmes fentes s'étendant entre le centre et les deuxièmes fentes.

Dans une configuration avantageuse, le guide est fixé sur la première face principale de l'armature mobile et le support de charge est fixé sur la deuxième face principale de l'armature mobile.

Dans une autre configuration préférentielle, le guide est fixé au support de charge par des vis passant au travers de trous traversants de l'armature mobile. Avantageusement, la au moins une cible est montée sur une des vis.

Il est également intéressant de prévoir que la charge soit un élément réfléchissant et préférentiellement que la face réfléchissante soit placée sur un même plan que les cibles et/ou que l'élément réfléchissant soit monté à l'intérieur du circuit électronique annulaire. L'invention a également pour objet un système mécatronique qui permet un actionnement amélioré de la partie mobile et qui assure un amortissement plus performant de la partie mobile lorsque cette dernière n'est pas alimentée.

Il est avantageux de prévoir un système mécatronique muni d'un actionneur magnétique selon l'une des configurations précédentes et qui comporte un circuit de commande définissant un premier circuit d'alimentation d'au moins la première bobine ou un circuit électrique d'amortissement connecté au moins aux bornes de la première bobine. Le circuit électrique d'amortissement inclut une résistance et une capacité pour former un circuit RLC.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre, de manière schématique, en vue de coupe, un actionneur magnétique avec une culasse statorique associée à des aimants permanents et des bobines d'actionnement ;
- la figure 2 illustre, de manière schématique, en vue de coupe, un autre mode de réalisation d'un actionneur magnétique avec une culasse statorique associée à des aimants permanents et des bobines d'actionnement ;
- la figure 3 représente de manière schématique, en vue de dessus, une configuration particulière d'armature mobile disposée entre les aimants permanents ;
- la figure 4 représente de manière schématique, en perspective, la culasse statorique associée à des aimants permanents et des bobines d'actionnement avec une armature mobile montée entre les aimants permanents ;
- la figure 5 représente de manière schématique, en vue de coupe, une variante de réalisation d'un actionneur magnétique avec une culasse statorique associée à des aimants permanents et des bobines d'actionnement ;
- la figure 6 représente de manière schématique, en perspective, une vue explosée d'un miroir monté sur une partie mobile au moyen d'un support de charge déformable, l'armature mobile étant montée sur un guide ;
- la figure 7 représente de manière schématique un circuit de commande connecté au stator.

### Description des modes de réalisation

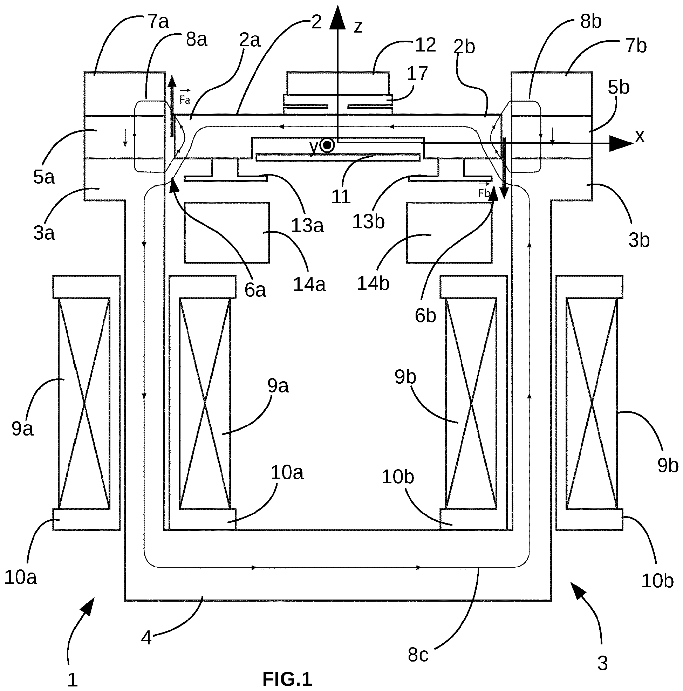

En référence aux figures 1, 2 et 5, l'actionneur magnétique comporte un stator 1 coopérant avec une armature mobile 2. Le stator 1 est considéré comme un élément fixe et l'armature mobile 2 est montée mobile en rotation par rapport au stator 1. Le stator 1 comporte une culasse statorique 3 qui est réalisée dans un matériau magnétique, de préférence dans un matériau magnétique doux par exemple un matériau ferromagnétique. La culasse statorique 3 peut être réalisée en FeSi, FeCo ou dans des matériaux dits « soft magnetic composite » qui sont par exemple des poudres de matériaux ferromagnétiques entourées par un film électriquement isolant. La culasse statorique 3 est avantageusement dépourvue d'aimant permanent.

Le stator 1 est configuré pour faire pivoter l'armature mobile 2 autour d'un ou de deux axes de rotation perpendiculaires entre eux. Le mouvement recherché est un mouvement de roulis et/ou de tangage et non un mouvement de lacet. De manière préférentielle, l'armature mobile 2 pivote sur une plage angulaire inférieure à 20°.

Comme illustré aux figures, 1, 2, 4 et 5, la culasse statorique 3 comporte un support 4 à partir duquel s'étendent plusieurs ailes dont notamment une première aile 3a et une deuxième aile 3b. L'actionneur magnétique possède un premier aimant 5a et un deuxième aimant 5b qui coopèrent avec l'armature mobile 2. L'aimant 5a/5b est un aimant permanent préférentiellement choisi à une bobine car il permet d'appliquer un champ magnétique fixe de manière passive pour définir une position de repos en l'absence d'alimentation. Le premier aimant 5a et le deuxième aimant 5b sont couplés magnétiquement aux ailes 3a/3b et à l'armature mobile 2.

La première aile 3a est surmontée par le premier aimant 5a et la deuxième aile 3b est surmontée par le deuxième aimant 5b. Les premier et deuxième aimants 5a, 5b sont des aimants à aimantation axiale et non à aimantation radiale. La direction d'aimantation des deux aimants 5a/5b est parallèle à une première direction z. En d'autres termes, l'axe « Nord-Sud » des aimants 5a et 5b est parallèle à la direction z. Les sens d'aimantation des premier et deuxième aimants sont identiques, c'est-à-dire que les axes « Nord-Sud » des deux aimants sont parallèles et orientés dans le même sens. Les ailes sont préférentiellement terminées par un aimant permanent. De manière avantageuse, les deux aimants 5a/5b sont fixés directement aux extrémités des deux ailes 3a/3b. Les ailes canalisent les lignes de champ magnétique provenant des aimants avant que les lignes de champ ne s'échappent vers les extrémités 2a/2b de l'armature mobile 2. Les aimants 5a/5b sont séparés du support 4 par les ailes 3a/3b.

Le premier aimant 5a et le deuxième aimant 5b sont alignés selon une deuxième direction x qui est perpendiculaire à la première direction z. L'armature mobile 2 est disposée entre le premier aimant 5a et le deuxième aimant 5b. L'armature mobile 2, le premier aimant 5a et le deuxième aimant 5b sont alignés selon la deuxième direction x. L'armature mobile 2 possède une première extrémité 2a et une deuxième extrémité 2b qui sont opposées selon la deuxième direction x. De manière préférentielle, le centre du premier aimant 5a, le centre du deuxième aimant 5b et le centre de l'armature mobile 2 sont alignés selon la direction x. Le centre est mesuré selon la direction z.

Comme illustré aux figures 1, 2 et 3, l'armature mobile 2 est espacée du premier aimant 5a et de l'extrémité de l'aile 3a par un premier entrefer 6a. L'armature mobile 2 est espacée du deuxième aimant 5b par un deuxième entrefer 6b. La première extrémité 2a fait sensiblement face au premier aimant 5a et la deuxième extrémité 2b fait sensiblement face au deuxième aimant 5b. Les deux extrémités 2a/2b sont reliées par un matériau magnétique pour former un circuit magnétique canalisant les lignes de champ entre les deux extrémités.

Selon les configurations, l'armature mobile 2 se présente sous la forme d'un élément plein ou préférentiellement d'un élément ajouré. L'armature mobile 2 est de configuration planaire et peut être sous la forme d'un disque ou d'un disque qui présente une pluralité de méplats. Avantageusement, les extrémités 2a/2b de l'armature mobile sont formées par des méplats qui font face à un aimant 5a/5b. L'aimant possède une face plane en regard de l'extrémité de manière à définir un entrefer sensiblement constant entre l'armature mobile 2 et l'aimant 5a/5b. Les entrefers 6a/6b sont d'épaisseur suffisante pour qu'un débattement angulaire de l'armature mobile 2 ne génère pas de collision entre l'armature mobile 2 et le stator 1.

De manière générale, les directions et sens d'aimantation appliqués par les premier et deuxième aimants 5a et 5b sont choisis pour appliquer des champs statiques Hsa et Hsb dont les composantes selon la direction x sont de sens opposés dans les zones d'entrefers 6a et 6b.

Le premier aimant 5a forme un premier circuit magnétique statique 8a avec la première extrémité 2a de l'armature mobile 2 et la première aile 3a. Le deuxième aimant 5b forme un deuxième circuit magnétique statique 8b avec la deuxième extrémité 2b de l'armature mobile 2 et la deuxième aile 3b. Dans le mode de réalisation illustré à la figure 1, les deux aimants 5a et 5b sont arrangés pour avoir une aimantation Sud-Nord dirigée vers les ailes 5a/5b.

Il est avantageux d'avoir des aimants de forme parallélépipédique pour faciliter la réalisation de l'actionneur, diminuer son coût et mieux gérer les forces magnétiques appliquées. Les aimants peuvent être réalisés en SmCo ou en NdFeB.

Les deux aimants 5a et 5b sont avantageusement surmontés par un matériau magnétique doux formant un pôle magnétique 7a/7b et avantageusement choisi parmi FeSi, FeCo et les matériaux dits « soft magnetic composite ». Le stator 1 possède un premier pôle 7a surmontant le premier aimant 5a et un deuxième pôle 7b surmontant le deuxième aimant 5b. Le premier pôle magnétique 7a est séparé de la première aile 3a par le premier aimant 5a et le deuxième pôle magnétique 7b est séparé de la deuxième aile 3b par le deuxième aimant 5b selon la direction z. Préférentiellement, chaque pôle 7a/7b est en contact direct avec un aimant 5a/5b. L'utilisation d'un pôle magnétique permet une meilleure canalisation des lignes de champ magnétique dans les premier et deuxième circuits statiques 8a et 8b et améliore le couplage magnétique avec l'armature mobile 2. Il est particulièrement avantageux d'avoir des structures identiques pour la première aile 3a et la deuxième aile 3b avec leur aimant 5a/5b associé et éventuellement leur pôle magnétique 7a/7b.

Comme indiqué plus haut, l'aimant 5a crée un premier flux magnétique statique circulant suivant un premier circuit magnétique statique 8a. Le premier circuit magnétique statique 8a part du premier aimant 5a puis traverse la première aile 3a, la zone d'entrefer 6a, l'extrémité 2a de l'armature mobile 2, à nouveau une zone d'entrefer, et le pôle magnétique 7a. Ce flux produit un champ magnétique statique Hsa dans la zone d'entrefer 6a, réalisant sa polarisation magnétique. L'aimant 5b crée un second flux magnétique statique circulant suivant un circuit magnétique statique 8b, similaire au circuit 8a. Le deuxième circuit magnétique statique 8b part du deuxième aimant 5b, puis traverse la deuxième aile 3b, la zone d'entrefer 6b, l'extrémité 2b de l'armature mobile 2, à nouveau une zone d'entrefer, et le pôle magnétique 7b. Ce flux crée un champ magnétique statique Hsb dans la zone d'entrefer 6b, réalisant sa polarisation magnétique. Les lignes de champ magnétique des circuits magnétiques 8a et 8b possèdent une composante selon les directions x et z dans les entrefers 6a et 6b. Les lignes de champ magnétique possèdent une composante selon les directions x et z dans les première et deuxième extrémités 2a et 2b.

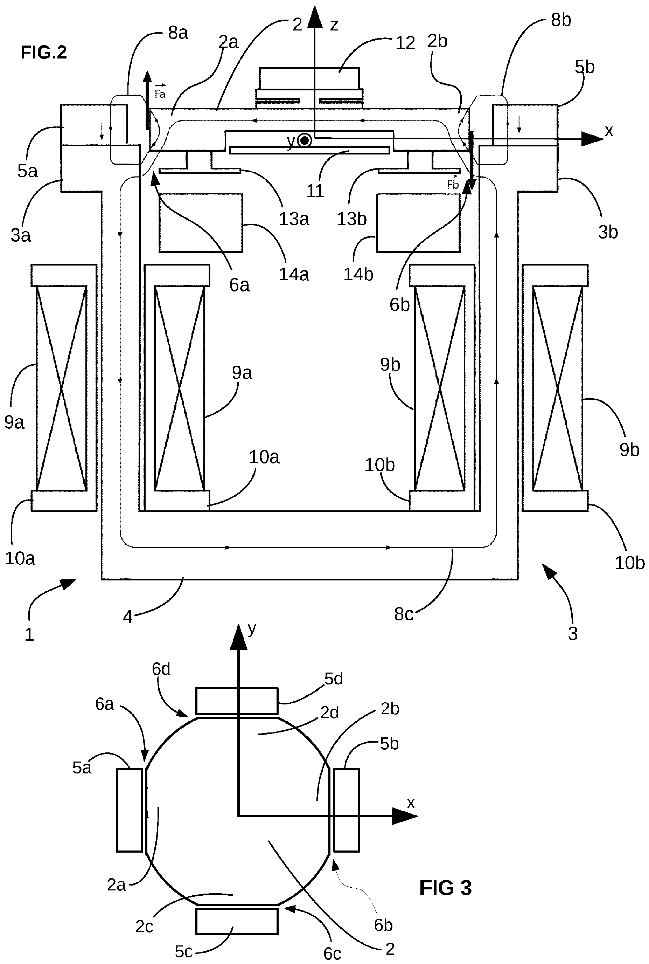

Dans le mode de réalisation illustré à la figure 2, les pôles magnétiques 7a et 7b sont absents. Il est également possible de prévoir que les aimants soient disposés en retrait des extrémités 2a/2b en comparaison des extrémités des ailes 3a/3b supportant les aimants 5a/5b selon la direction x. Le décalage des aimants 5a/5b par rapport aux ailes peut être appliqué dans la configuration de la figure 1.

Les deux flux magnétiques provenant des aimants 5a et 5b appliquent deux forces d'attraction magnétique sur les deux extrémités opposées de l'armature mobile 2. La position angulaire de l'armature mobile 2 s'adapte afin de réduire la réluctance ce qui définit la position de repos de l'armature mobile 2 qui s'établit suivant l'axe x. De manière préférentielle, les deux aimants 5a/5b sont identiques et sont agencés pour que les intensités (en valeur absolue) des champs générés |Hsa| et |Hsb| soient égales.

Le stator 1 comporte également au moins une première bobine 9a, de préférence des première et deuxième bobines 9a et 9b qui appliquent un champ magnétique dynamique Hd qui interagit avec les deux extrémités opposées 2a et 2b de l'armature mobile 2. Un circuit magnétique dynamique 8c existe entre la première aile 3a, le support 4, la deuxième aile 3b, l'entrefer 6b, l'armature mobile 2 et l'entrefer 6a, comme cela est illustré à la figure 1. De manière générale, contrairement aux champs Hsa et Hsb dus aux aimants, la composante, selon la direction x, du champ dynamique Hd est de même sens dans les zones d'entrefers 6a et 6b.

Le support 4 et les première et deuxième ailes 3a/3b sont en matériau magnétique. Le support 4 est réalisé en matériau magnétique afin de canaliser les lignes de champ de la bobine entre les ailes. Comme illustré à la figure 1, la culasse statorique 3 possède une forme de U lorsqu'elle est observée selon un plan de coupe transversal. De manière avantageuse, le support 4 est monolithique ou monobloc avec les deux ailes 3a/3b. Le support 4 peut être plein ou ajouré. La culasse statorique 3 canalise les lignes de champ magnétique dynamique.

De manière avantageuse, un circuit magnétique continu est formé par les ailes 3a/3b et le support 4 pour augmenter l'intensité du champ magnétique dans les entrefers 6a et 6b à proximité des deux extrémités opposées 2a et 2b de l'élément mobile 2. Les lignes de champ magnétique du circuit magnétique 8c possèdent une composante selon les directions x et z dans les entrefers 6a et 6b. Les lignes de champ magnétique possèdent une composante selon les directions x et z dans les première et deuxième extrémités 2a et 2b. Comme illustré à la figure 1, dans la vue en coupe selon le plan contenant les directions x et z, il est avantageux de prévoir que les bobines, les aimants et les ailes appartiennent à un même plan perpendiculaire à l'axe de rotation.

La première bobine 9a est disposée autour de la première aile 3a, entre le support 4 et l'aimant 5a. Lorsque la première bobine d'actionnement 9a est alimentée, elle génère un champ magnétique. De manière avantageuse, une deuxième bobine 9b est disposée autour de la deuxième aile 3b afin de faciliter l'obtention d'un champ magnétique important dans les entrefers 6a et 6b. Cette deuxième bobine 9b peut assurer une redondance vis-à-vis de la première bobine 9a, pour suppléer à celle-ci en cas de défaillance.

Les lignes de champ sont canalisées dans la culasse statorique 3 par la première aile 3a puis par le support 4 et par la deuxième aile 3b. Les lignes de champ quittent la deuxième aile 3b via l'entrefer 6b pour atteindre la deuxième extrémité 2b de l'armature mobile 2 en matériau magnétique et traverser l'armature mobile 2. Les lignes de champ rejoignent la première aile 3a à partir de la première extrémité 2a de l'armature mobile 2 via l'entrefer 6a. Les deux extrémités opposées 2a/2b de l'armature mobile 2 situées face à l'entrefer 6a, 6b sont soumises aux champs magnétiques produits par les aimants 5a/5b et par le champ magnétique produit par la première bobine 9a.

L'application d'un courant dans la bobine 9a provoque une dissymétrie des champs totaux entre les entrefers 6a et 6b. Dans l'exemple de la figure 1, le champ Hd dû à la bobine 9a est orienté dans le sens du champ Hsb dû à l'aimant 5b et orienté dans le sens contraire au champ Hsa dû à l'aimant 5a. Le champ total Hta=Hsa-Hd dans l'entrefer 6a est ainsi réduit par rapport au champ Hsa sans application de courant, ce qui diminue la force d'attraction de l'extrémité 2a l'armature mobile vers l'extrémité de l'aile 3a. A l'inverse, le champ total Htb=Hsb+Hd dans l'entrefer 6b est augmenté par rapport au champ Hsb sans application de courant, ce qui augmente la force d'attraction de l'extrémité 2b de l'armature mobile vers l'extrémité de l'aile 3b.

Comme illustré aux figures, 1, 2, 4, 5 et 6, pour obtenir un déplacement en rotation de l'armature magnétique 2 par rapport au stator 1, il est avantageux d'utiliser un guide 11 qui autorise la rotation de l'armature mobile 2 autour d'un premier axe de rotation qui est parallèle à une troisième direction y perpendiculaire à la première direction z et perpendiculaire à la deuxième direction x. De manière préférentielle, le guide 11 est configuré pour empêcher un mouvement en translation de l'armature mobile 2 selon la direction x pour éviter tout collage ou contact avec l'un des deux aimants 5a/5b.

Il est avantageux de prévoir que le guide 11 soit configuré pour n'autoriser que des rotations autour d'axes de rotation qui sont perpendiculaires à la direction z. Le guide 11 peut être configuré pour empêcher toute translation perpendiculaire à l'axe z. En n'autorisant qu'une ou plusieurs rotations autour d'un axe de rotation perpendiculaire à la direction z, la modification des champs magnétiques aux deux extrémités opposées de l'armature mobile 2 se traduit par un mouvement tangentiellement à la face en regard de l'aimant, principalement selon la direction z. Ce mouvement s'accompagne d'une augmentation de la surface d'entrefer faisant vis-à-vis entre l'extrémité de l'aile 3b et la face de l'extrémité 2b de l'armature mobile située devant l'aimant 5b conduisant à une diminution de la réluctance de l'entrefer 6b sans nécessiter de réduction d'épaisseur d'entrefer 6b. Cette diminution de la réluctance de l'entrefer 6b est à l'origine de la force Fb s'appliquant sur l'extrémité 2b de l'armature mobile. Inversement, l'augmentation de réluctance de l'entrefer 6a est à l'origine de la force Fa s'appliquant sur l'extrémité 2a de l'armature mobile.

Il en résulte des forces magnétiques présentes à la première extrémité 2a et à la deuxième extrémité 2b de l'armature mobile 2 formant un couple, ce qui cause la rotation de l'armature mobile 2 autour de l'axe de rotation parallèle à la direction y, perpendiculaire à la direction x reliant les deux extrémités.

L'intensité du courant appliqué dans la première bobine 9a définit la force du flux et le sens du courant définit l'orientation du flux. Comme le circuit magnétique dynamique passe par les deux extrémités de l'armature mobile, le flux appliqué par la première bobine 9a sera de même sens que l'un des deux circuits magnétiques statiques et de sens opposé à l'autre circuit magnétique statique ce qui cause la rotation. L'inversion du sens du courant permet l'inversion du sens des forces et donc du sens de rotation.

Les bobines 9a/9b sont formées d'au moins un enroulement de fil électriquement conducteur, par exemple un fil de cuivre émaillé. Les ailes en matériau magnétique canalisent les lignes de champ magnétique afin que le champ magnétique dynamique Hd provenant des bobines 9a et 9b s'ajoute ou se soustrait au champ magnétique statique Hs provenant des aimants 5a et 5b dans les entrefers 6a et 6b.

Dans un mode de réalisation avantageux, les première et deuxième bobines 9a et 9b sont alimentées avec la même source de courant pour être traversées par le même courant. De préférence, les première et deuxième bobines 9a et 9b sont montées en série de manière à ce que le courant qui les alimente, génère des champs additionnels. De cette manière, lors du passage d'un même courant, les bobines 9a et 9b appliquent des champs magnétiques de directions opposées dans les ailes 3a et 3b et d'intensité identique. Dans une alternative de réalisation, les bobines 9a et 9b sont alimentées par des sources de courant différentes. Ainsi chaque bobine peut assurer une redondance, permettant de faire fonctionner l'actionneur même lorsqu'une bobine ou un circuit d'alimentation est défaillant.

La ou les sources de courant associées aux bobines 9a et 9b sont configurées pour fournir différentes intensités de courants ainsi que deux sens différents de courant dans la ou les bobines pour faire pivoter l'armature mobile 2 dans les deux sens de pivotement et continument dans la gamme accessible.

Dans un mode de réalisation avantageux illustré aux figures 1, 2, 4 et 5, les bobines 9a et 9b sont formées sur des supports de bobines 10a et 10b. Les supports de bobines 10a et 10b sont réalisés dans des matériaux non-électriquement conducteurs ce qui permet d'éviter tout court-circuit entre les bobines 9a/9b et la culasse statorique 3. Une telle configuration permet de faciliter le montage des bobines 9a et 9b.

Comme indiqué plus haut, l'armature mobile 2 est disposée à l'intérieur du stator 1 entre les deux aimants 5a et 5b. L'armature mobile 2 comporte une pièce magnétique qui forme les deux extrémités 2a/2b.

De manière avantageuse, le rapport d'épaisseur entre l'armature mobile 2 et les aimants est compris entre 0,8 et 1,2. Préférentiellement, l'épaisseur de l'armature mobile 2 est identique à l'épaisseur des premier et deuxième aimants 5a/5b selon la direction z. Préférentiellement, le plan médian de l'armature mobile 2 au repos est aligné avec le plan médian des aimants 5a/5b encore plus préférentiellement lorsque l'actionneur est pourvu des pôles magnétiques 7a/7b. Le plan médian correspond au plan disposé à équidistance des deux faces opposées des aimants ou de l'armature mobile 2 selon la direction z. En l'absence de pôles magnétiques 7a/7b, il est avantageux de disposer le plan médian de l'armature mobile aligné avec l'interface entre l'aimant 5a/5b et l'aile 3a/3b.

L'armature mobile 2 est de forme planaire. L'armature mobile 2 possède avantageusement une longueur suivant la direction x et une largeur suivant la direction y qui sont supérieures à son épaisseur suivant la direction z, par exemple au moins trois fois supérieure. L'armature mobile 2 s'étend principalement selon les axes x et y. L'armature mobile 2 possède avantageusement un axe de symétrie parallèle à la direction z. De manière préférentielle, l'axe de symétrie de l'armature mobile 2 est colinéaire avec un axe de symétrie de la culasse statorique 3 ou au moins des ailes. L'armature mobile 2 possède des première et deuxième faces principales opposées reliées par une paroi latérale. La paroi latérale définit les première et deuxième extrémités opposées 2a, 2b. La première face principale est destinée à recevoir une charge à faire pivoter par rapport au stator. La charge peut être un miroir, un échantillon ou tout autre élément à faire pivoter.

Dans le mode de réalisation illustré aux figures 1, 2, 3, 4 et 5, la dimension de l'armature mobile 2 selon la direction x est légèrement inférieure à la plus petite des distances entre la distance de séparation entre les deux aimants 5a/5b, la distance de séparation entre les deux ailes 3a /3b et la distance de séparation entre les deux pôles 7a /7b, pour assurer des entrefers magnétiques 6a/6b et éviter tout contact entre l'armature mobile 2 et les ailes 3a/3b, les aimants 5a/5b et les pôles 7a/7b lors de la rotation. La largeur des entrefers 6a/6b est choisie petite devant la dimension de l'armature mobile 2 selon la direction x.

Les deux faces principales de l'armature mobile 2 sont dépourvues de recouvrement par une aile ou par un aimant selon la direction z ce qui évite tout risque de contact. Ces faces peuvent être strictement planes, planes avec un chanfrein, ou légèrement arrondies dans un plan de coupe contenant les directions x et z, par exemple arrondies suivant un diamètre égal à la dimension selon la direction x de l'armature mobile 2.

Pour éviter le collage de l'armature mobile 2 sur les aimants, l'armature mobile 2 est montée sur un guide 11 qui restreint ou empêche les mouvements de l'armature mobile 2 dans le plan perpendiculaire à la direction z. L'armature mobile 2 est reliée mécaniquement au stator et par exemple à la culasse statorique 3 au moyen du guide 11. Le guide 11 est avantageusement monté fixe sur la culasse statorique 3. Il est particulièrement avantageux d'utiliser un guide 11 qui empêche les translations de l'armature mobile le long de la direction x et le long de la direction y et préférentiellement toute translation dans un plan contenant le premier axe et le deuxième axe. Il est particulièrement avantageux de choisir un guide différent d'une tige de flexion car une telle configuration n'exclut pas le collage sur les aimants tout en étant difficile à actionner pour assurer la rotation. Le guide 11 est avantageusement configuré pour empêcher une rotation autour de la troisième direction z. Le guide définit un ou plusieurs axes de rotation qui sont sensiblement contenus dans le volume du guide 11. Le guide peut être configuré pour autoriser la rotation de l'armature mobile 2 autour de différents axes de rotation perpendiculaires à la direction z et bloquer les translations perpendiculaires à la direction z ce qui facilite l'obtention d'un entrefer constant ou quasi-constant lors des rotations. En cas de vibration, les risques de collage sont également évités.

Les deux ailes 3a/3b s'étendent majoritairement ou exclusivement selon la première direction z perpendiculaire à la deuxième direction x et à la troisième direction y à partir du support 4.

Le guide 11 peut être monté fixe sur le stator 1, par exemple par fixation sur la culasse statorique 3. Le guide 11 supporte le poids de l'armature mobile 2 tout en autorisant ses déplacements en rotation au moins autour du premier axe de rotation. Il est avantageux de former le guide au moyen d'une plaque plane ou sensiblement plane qui est ajourée au moyen d'une ou plusieurs fentes afin de former un palier de guidage élastique. Les fentes, les points d'ancrage au stator 1 et les points d'ancrage à l'armature mobile 2 sont agencés pour favoriser la rotation autour des axes x et y et restreindre les autres mouvements. Les fentes sont traversantes selon la direction z.

En utilisant un guide en forme de plaque ajourée par des fentes, l'armature mobile 2 peut pivoter sans avoir à vaincre des forces de frottement ce qui permet d'assurer l'obtention de faibles déplacements angulaires. La rotation est obtenue par déformation de zones préférentielles de la plaque ajourée.

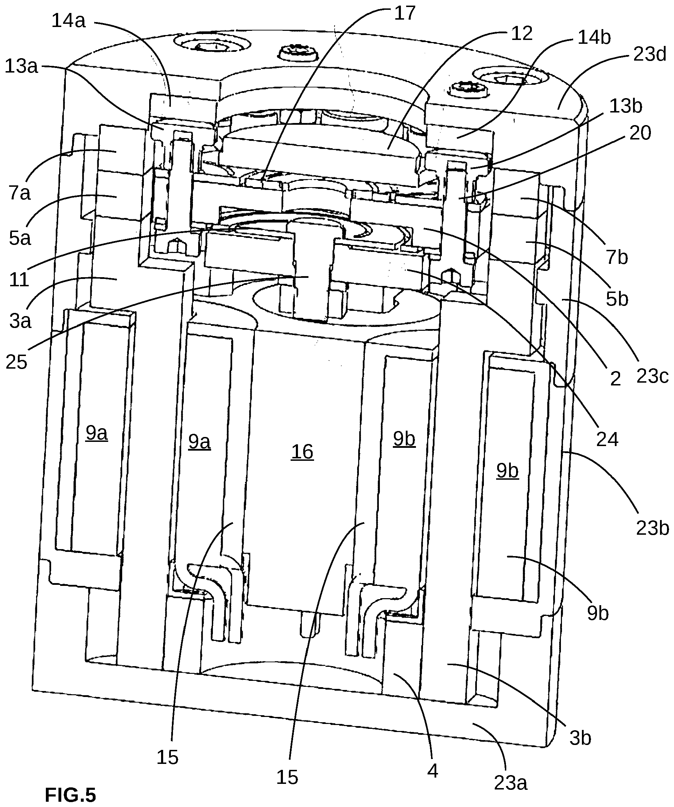

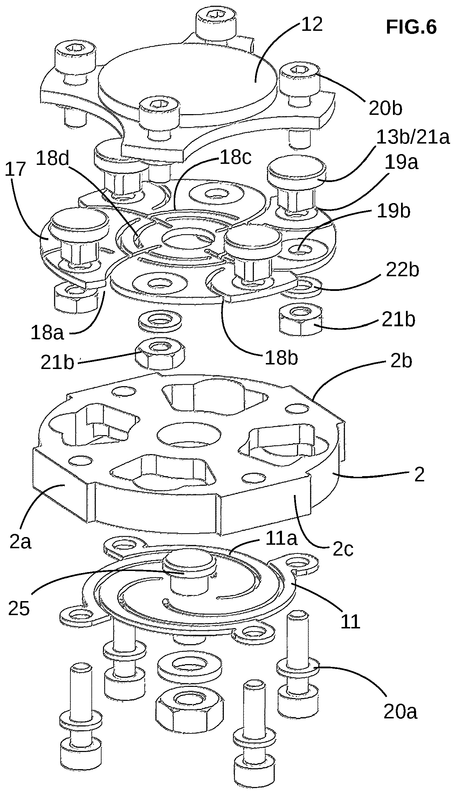

Dans le mode de réalisation illustré aux figures 5 et 6, le guide 11 est un palier de guidage élastique formé par un corps ajouré par exemple une plaque ajourée qui définit une pluralité de fentes hélicoïdales ou de segments de spirales. La plaque est montée perpendiculaire à la direction z pour favoriser les rotations autour d'axes perpendiculaires à la direction z. Il est avantageux de former le point d'ancrage entre le stator et le palier de guidage élastique au centre du palier de guidage. Les points d'ancrage entre le palier de guidage élastique et l'armature mobile sont disposés à la périphérie du palier de guidage élastique. Le palier de guidage élastique peut être formé en matériau métallique. Un tel palier de guidage élastique facilite la réalisation d'une rotation autour d'un premier axe de rotation parallèle à la direction y et autour d'un deuxième axe de rotation parallèle à la direction x sans introduire de frottement ce qui facilite l'obtention d'angles de rotation faibles assurant un mouvement à résolution quasi-illimitée et une bonne absorption des efforts sans générer de chocs. Le guide 11 est de forme planaire et s'étend principalement selon les directions x et y avec une épaisseur inférieure à sa longueur et sa largeur. De manière avantageuse, le guide 11 est fixé à la face principale inférieure de l'armature mobile 2. Le guide forme avantageusement un axe de rotation qui est inclus dans le plan contenant les interfaces entre les deux aimants 5a/5b et les deux ailes 3a/3b. De manière avantageuse, le guide comporte un axe de symétrie parallèle à la direction z.

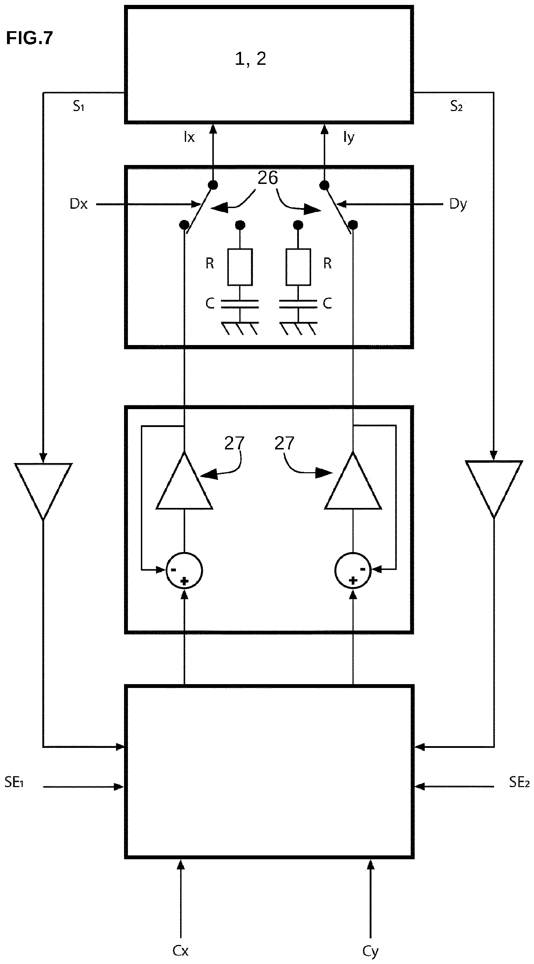

De manière avantageuse, un circuit de commande est connecté à la ou aux sources de courant. Le circuit de commande est configuré pour faire circuler un courant électrique dans la ou les bobines 9a et 9b. Un champ magnétique dynamique Hd est produit qui circule le long des ailes 3a et 3b et du support 4 jusqu'à atteindre les deux extrémités de l'armature mobile 2. Un mode de réalisation particulier de circuit de commande est illustré à la figure 7.

En appliquant un champ magnétique dynamique ayant des composantes opposées le long des deux ailes 3a et 3b, il est possible d'obtenir la rotation de l'armature mobile 2. Dans la configuration illustrée à la figure 1, le champ Hd dans l'entrefer 6a est de sens identique au champ Hsa dans l'entrefer 6a. Le champ Hd dans l'entrefer 6b est de sens opposé au champ Hsb dans l'entrefer 6b.

Le sens de circulation du courant dans les bobines 9a/9b définit le sens de rotation de l'armature mobile. Selon le sens du courant appliqué, la valeur du champ magnétique Hd s'ajoute ou se soustrait de la valeur du champ magnétique statique Hsa et Hsb. Au premier ordre, le couple magnétique total appliqué sur l'armature mobile 2 et donc l'angle de rotation est proportionnel à l'intensité du courant I. Le sens du courant appliqué dans les bobines permet de définir le signe de l'angle de rotation de l'armature mobile 2 par rapport à la culasse statorique 3. L'actionneur magnétique est en mesure de définir précisément l'angle de rotation par rapport à une position de référence. Les configurations illustrées permettent d'obtenir un mécanisme magnétique contrôlable en rotation dans les deux directions autour de l'axe de rotation.

La configuration présentée est particulièrement avantageuse car elle permet de transmettre des couples à l'armature mobile 2 sans contact mécanique ce qui évite d'avoir à vaincre des forces de frottement. L'armature mobile 2 est dépourvue de contact direct avec les aimants 5a et 5b et avec les bobines 9a et 9b. L'armature mobile est également dépourvue de contact avec les ailes 3a/3b. L'armature mobile est également dépourvue d'aimant ce qui permet un gain sur la masse à déplacer.

Dans un mode de réalisation avantageux, la distance minimale qui sépare la paroi latérale de l'armature mobile 2 et la face latérale de l'aimant 5a/5b (selon la direction x) est inférieure à l'épaisseur de l'aimant et de l'armature mobile. Avantageusement, la distance minimale qui sépare la paroi latérale de l'armature mobile 2 et l'extrémité de l'aile 3a/3b est au moins deux fois plus petite, de préférence au moins cinq fois plus petite que l'épaisseur de l'aimant et/ou de l'armature mobile.

La configuration présentée est très intéressante car elle permet, au moyen d'un seul actionneur magnétique de type fer mobile, de déplacer une pièce mobile en rotation autour d'un axe de rotation. Une telle configuration est avantageuse car elle permet de réduire la masse du dispositif en comparaison des dispositifs qui ont besoin de plusieurs actionneurs pour réaliser une rotation autour d'un seul axe.

Dans la configuration représentée, la ou les bobines 9a/9b forment un circuit magnétique dynamique qui traverse la culasse statorique et l'armature mobile. Même lorsque deux bobines sont utilisées, un seul champ magnétique lié au circuit magnétique dynamique traverse l'armature mobile. Un écart d'alimentation entre les bobines 9a et 9b ou un vieillissement différent entre les bobines est plus facilement maitrisé que la configuration de l'art antérieur ou chaque extrémité est associée à un champ magnétique dynamique.

Dans les configurations de l'art antérieur, les forces réluctantes sont obtenues par des variations d'épaisseur d'entrefers, selon la direction z, ce qui complique considérablement la réalisation de l'actionneur car la valeur de l'entrefer évolue fortement lors de la rotation et peut atteindre le collage de l'armature mobile, de l'aimant ou du disque sur le noyau. Au contraire selon l'invention, les forces réluctantes sont obtenues par des variations de surface d'entrefer disposées perpendiculairement à la direction x, ce qui permet de libérer la partie supérieure et inférieure de l'armature mobile pour autoriser des angles de pivotement plus importants, tout en évitant les collages magnétiques et les chocs avec le stator.

En référence aux figures 3, 4 et 5, l'actionneur magnétique peut être configuré pour générer des déplacements angulaires autour de deux axes de rotation respectivement parallèles aux directions x et y qui sont orthogonaux entre eux et à la direction z. Le pivotement de l'armature mobile 2 autour de la direction x est obtenu par une configuration identique à ce qui a été décrit précédemment et décalé de 90° autour de la direction z. Comme illustré à la figure 2, l'armature mobile 2 comporte des troisième et quatrième extrémités 2c et 2d coopérant avec des troisième et quatrième aimants 5c et 5d. Les troisième et quatrième extrémités 2c et 2d sont reliées par un circuit magnétique.

La culasse statorique 3 comporte des troisième et quatrième ailes 3c et 3d dont la première extrémité est surmontée respectivement par un troisième aimant 5c et un quatrième aimant 5d qui sont des aimants à aimantation axiale ayant une orientation parallèle à la direction z. L'armature mobile 2 est disposée entre les troisième et quatrième aimants 5c, 5d et alignée avec ces derniers selon la direction y. L'armature mobile 2 est séparée des troisième et quatrième aimants 5c, 5d par respectivement un troisième entrefer 6c et un quatrième entrefer 6d. L'armature mobile 2 et les deux paires d'aimants appartiennent avantageusement à un même plan en l'absence de sollicitation des bobines 9a, 9b, 9c, 9d. Le plan est perpendiculaire à la direction z.

Les troisième et quatrième aimants 5c et 5d forment respectivement des troisième et quatrième circuits magnétiques statiques avec la troisième aile 3c, la troisième extrémité 2c de l'armature mobile 2 d'une part et la quatrième aile 3d, la quatrième extrémité 2d de l'armature mobile 2 d'autre part. Les troisième et quatrième extrémités 2c/2d opposées sont alignées selon la direction y. Comme pour le mode de réalisation précédent, il est avantageux d'utiliser des pôles magnétiques 7c et 7d sur les troisième et quatrième aimants 5c/5d.

Une bobine additionnelle 9c est montée autour de la troisième aile 3c. La bobine additionnelle 9c génère un deuxième champ magnétique dynamique ayant des lignes de champ canalisées par la troisième aile 3d, le support 4, la quatrième aile 3d jusqu'à atteindre la quatrième extrémité de l'armature mobile 2. Les lignes de champ provenant de la quatrième extrémité 2d de l'armature mobile 2 traversent l'armature mobile au moyen du matériau magnétique jusqu'à atteindre la troisième extrémité 2c puis la troisième aile 3c.

Les troisième et quatrième aimants 5c/5d définissent la position de repos de l'armature mobile autour de la direction x. La bobine d'actionnement additionnelle 9c applique un champ magnétique qui cause la rotation de l'armature mobile 2 autour de la direction x dans un sens ou dans un autre.

Comme précédemment, il est avantageux d'utiliser des troisième et quatrième bobines 9c et 9b qui sont installées respectivement autour de la troisième aile 3c et de la quatrième aile 3d de manière à ce que les lignes de champ magnétique dynamique produites soient identiques dans les troisième et quatrième entrefer 6c/6d afin de modifier l'intensité du couplage magnétique qui existe entre l'armature mobile 2, l'extrémité de l'aile 3c,3d et les deux aimants 5c, 5d.

Le premier ensemble de bobines 9a/9b et d'aimants 5a/5b assure la rotation autour de la direction y et le deuxième ensemble de bobines 9c/9d et d'aimants 5c/5d assure la rotation autour de la direction x.

Le fonctionnement magnétique avec deux axes de rotation est similaire à un fonctionnement avec un seul axe de rotation avec une distribution des densités de flux et des lignes de champ aux chemins plus complexes. Chaque couple d'aimants à polarisation axiale est agencé pour que les orientations d'aimantation soient orientées selon la direction z. Le sens d'aimantation est identique pour les deux aimants qui se font face selon la direction x ou selon la direction y, c'est-à-dire pour les deux aimants qui coopèrent pour assurer une rotation selon un des axes de rotation. Il est avantageux de prévoir que le couple d'aimants intervenant dans la rotation autour du premier axe présentent un sens d'aimantation opposé à celui du couple intervenant dans la rotation autour du deuxième axe. En d'autres termes, les premier et deuxième aimants 5a/5b ont un sens d'aimantation opposé à celui des troisième et quatrième aimants 5c/5d. Il existe alors une alternance du sens d'aimantation, selon la direction z, des aimants lorsque l'on se déplace autour de l'armature mobile 2. Cette configuration permet de réduire le moment dipolaire de l'actionneur et de maintenir un moment quadripolaire faible. Cependant, l'utilisation de quatre aimants ayant un même sens d'aimantation est également possible.

En activant uniquement les bobines 9a et 9b, il est possible de faire tourner l'armature mobile 2 autour de la direction y. En activant uniquement les bobines 9c et 9d, il est possible de faire tourner l'armature mobile 2 autour de la direction x. En activant les bobines 9a, 9b, 9c et 9d, il est possible de combiner une rotation autour des deux axes de rotation.

Il est avantageux de prévoir que les bobines 9c et 9d soient alimentées par la même source de courant et soient montées en série comme cela a été expliqué pour les bobines 9a et 9b. Les autres modes de réalisation sont également possibles.

Il est avantageux de prévoir que les quatre aimants soient identiques dans l'intensité du champ magnétique et éventuellement dans leurs dimensions ce qui permet de faciliter l'actionnement de l'armature mobile 2. Dans les modes de réalisation illustrés, l'actionneur ne comporte que deux aimants qui interviennent dans la rotation autour d'un axe de rotation soit quatre aimants pour obtenir la rotation autour de deux axes perpendiculaires. Préférentiellement, les aimants sont contenus dans un plan qui contient également l'armature mobile. Les bobines d'actionnement appartiennent à un autre plan décalé du plan des aimants. Le demi-espace, défini par le plan médian de l'armature mobile 2 et perpendiculaire à la direction z, sépare les bobines d'actionnement et la charge à déplacer. Les lignes de champ magnétique produites par les aimants et canalisées par les ailes quittent les ailes depuis les faces latérales vers la face principale inférieure de l'armature mobile.

L'actionneur magnétique peut faire partie d'un dispositif de pointage optique qui comporte une source de rayonnement et/ou un capteur dudit rayonnement.

La face supérieure de l'armature mobile 2 peut être surmontée d'un miroir 12 ou de tout autre élément réfléchissant. Le miroir 12 peut être configuré pour réfléchir un rayonnement optique et/ou infrarouge. Il est également possible de prévoir que l'élément réfléchissant 12 soit configuré pour réfléchir un autre rayonnement électromagnétique. Cette configuration est particulièrement avantageuse, car la face supérieure de l'armature mobile 2 n'est pas connectée directement à un autre élément disposé hors de l'armature mobile 2 (par exemple sur la culasse) ce qui viendrait entraver ou compliquer la rotation de l'armature mobile 2. La face inférieure de l'armature mobile 2 fait face à la culasse statorique. Le miroir 12 est monté fixe sur la face supérieure de l'armature mobile de manière à ce que la rotation de l'armature mobile 2 se traduise par une rotation identique du miroir 12.

Le miroir 12 peut être configuré pour coopérer avec une source de rayonnement par exemple un laser. La source de rayonnement émet un faisceau qui frappe le miroir et l'orientation du miroir 12 permet de renvoyer le faisceau réfléchi sur un capteur. En modifiant l'orientation du miroir 12, il est possible de renvoyer le faisceau sur plusieurs capteurs différents. L'orientation du miroir 12 permet également de s'adapter à une modification de la position du capteur par rapport à la position de la source de rayonnement. Selon les modes de réalisation, la source de rayonnement ou le capteur peut être mobile par rapport à la culasse statorique 3.

Le dispositif de pointage optique peut être utilisé dans un système de communication optique entre deux objets, par exemple entre deux satellites. Chaque objet possède un dispositif de pointage optique qui est associé à un émetteur et/ou à un récepteur de signal optique. La position angulaire du miroir 12 peut être asservie afin de diriger le faisceau lumineux du premier objet vers le deuxième objet et tenir compte des déplacements entre les objets. La position angulaire du miroir 12 peut être asservie afin de diriger le faisceau lumineux reçu vers un capteur du signal optique. La source de signal s'étant déplacée, il est nécessaire de modifier l'orientation du miroir pour le réfléchir sur le capteur.

Dans un autre mode de réalisation, le dispositif réfléchissant est remplacé par un porte-échantillon ou un échantillon à analyser. Par exemple, l'actionneur peut faire partie d'un dispositif de diffractométrie. L'armature mobile comporte un échantillon de référence. La rotation de l'armature mobile place l'échantillon de référence face au faisceau de rayonnement électromagnétique tel que des rayons X ou de particules tels que des neutrons pour faire diffracter le faisceau. L'échantillon de référence peut être remplacé par un porte-échantillon où l'armature mobile peut comporter l'échantillon de référence et le porte-échantillon.

Dans un mode de réalisation particulier, un système de capteurs internes formés de cibles 13a/13b et capteurs 14a/14b est intégré à l'actionneur. Une ou plusieurs cibles 13a et 13b sont montées fixes sur l'armature mobile 2. Les cibles 13a et 13b coopèrent avec des capteurs 14a et 14b qui sont configurées pour mesurer la position de l'armature mobile 2 par rapport à la culasse statorique 3 et donc suivre la rotation de l'armature mobile 2 par rapport à la culasse statorique 3. De manière avantageuse, les capteurs 14a/14b sont des sondes de capteurs magnétiques de type courant de Foucault. De manière avantageuse, les cibles 13a/13b sont alignées selon la direction x pour avoir une sensibilité maximale à la rotation autour de la direction y. De manière avantageuse, les cibles 13a 13b et les capteurs 14a 14b sont séparés de la culasse statorique 3 et/ou des bobines 9a/9b par l'armature magnétique 2, pour se situer du côté de la charge 12. De manière avantageuse, les surfaces des cibles 13a/13b faisant face aux sondes 14a/14b sont situées dans le même plan que la surface réfléchissante du miroir 12 formant la charge, ce qui permet de mesurer avec précision les mouvements de la surface réfléchissante du miroir 12. Il est également possible d'utiliser des capteurs magnétiques, des capteurs capacitifs et des capteurs optiques pour mesure la course linéaire d'une zone de l'armature mobile 2 et en déduire l'angle de rotation associé.

Les sondes de capteurs 14a/14b sont configurées pour mesurer la distance de séparation entre la cible 13a/13b et le capteur 14a/14b associé. Les capteurs 14a/14b sont associés à un circuit de commande qui est configuré pour calculer l'angle de rotation de l'armature mobile 2 suite à la mesure d'un rapprochement et d'un éloignement entre les capteurs 14a/14b et les cibles 13a/13b. Avantageusement, deux cibles 13a/13b sont disposées selon un axe qui est perpendiculaire à l'axe de rotation de l'armature mobile 2. Ces deux cibles 13a/13b coopèrent avec deux capteurs. Un capteur détecte un rapprochement d'une cible alors que l'autre capteur détecte un éloignement de l'autre cible ce qui permet de déterminer le sens de rotation. L'intensité du signal permet de déterminer la valeur de l'angle de rotation. Un fonctionnement avec un seul capteur est également possible mais moins avantageux car moins précis. L'utilisation de deux capteurs pour un axe de rotation permet de réaliser une mesure différentielle qui autorise par exemple la compensation des effets de dilatation thermique de l'armature mobile ou du stator dus à l'échauffement des bobines d'actionnement. L'actionneur peut tirer avantage d'une absence de capteurs internes pour autoriser des courses angulaires maximales. Le contrôle de ces courses se fait alors avec des capteurs externes.

Il est particulièrement avantageux de réaliser la culasse statorique 3 dans un matériau thermiquement conducteur, par exemple un métal. Cela permet une bonne transmission des flux thermiques en provenance des bobines 9a, 9b, 9c et 9d. Une bonne évacuation de la chaleur permet de limiter le transfert de chaleur vers l'armature mobile 2 qui comporte un élément réfléchissant 12 dont les propriétés optiques et/ou les dimensions peuvent évoluer avec la température.

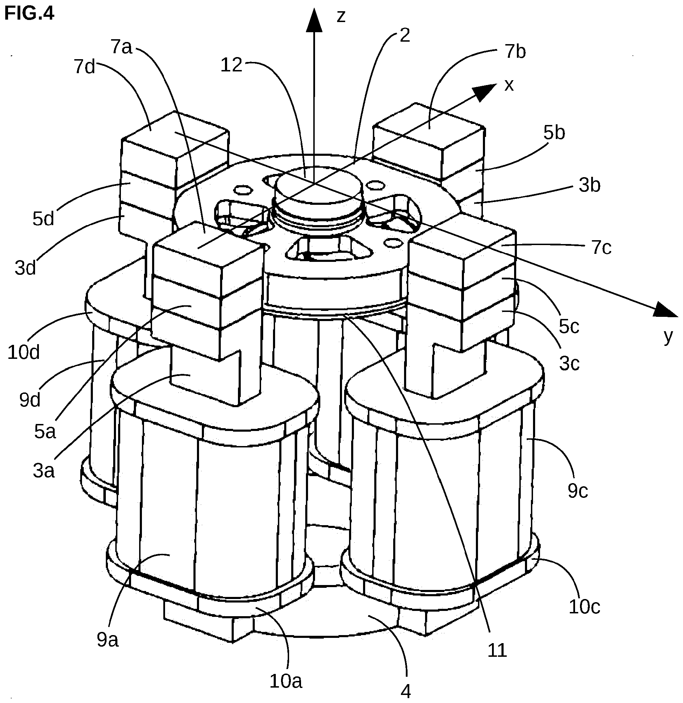

Il est avantageux de coupler la culasse statorique 3 à un drainage thermique de manière à évacuer une partie de la chaleur produite par les bobines 9a, 9b, 9c et 9d. Les interfaces du drainage thermique sont avantageusement disposées sur le support 4. L'utilisation d'un drainage thermique permet d'utiliser des courants ayant une plus grande valeur. L'armature mobile 2 n'étant pas couplée physiquement avec la culasse statorique 3, la chaleur présente dans la culasse statorique 3 circule difficilement jusqu'à l'armature mobile 2. Dans le mode de réalisation illustré à la figure 4, les bobines d'actionnement sont noyées dans une résine 15 afin de faciliter l'évacuation de la chaleur. La résine est connectée thermiquement avec les interfaces du drainage thermique.

Comme illustré à la figure 6, il est avantageux d'installer un support de charge 17 sur la face supérieure de l'armature mobile 2 afin de transmettre le mouvement de rotation de l'armature mobile 2 sans induire de déformation dans le miroir 12. Le support de charge 17 est de plus préférentiellement configuré pour rendre l'élément réfléchissant 12 insensible aux variations de températures sur au moins une plage de température donnée. Le support de charge 17 permet d'éviter des modifications et des déformations de l'élément réfléchissant dues à une variation de température causée par l'actionneur et notamment les bobines. Le support de charge 17 est configuré pour limiter les flux de chaleur entre l'armature mobile 2 et l'élément réfléchissant 12. Dans le mode de réalisation privilégié illustré aux figures 5 et 6, le dispositif réfléchissant 12 est un miroir comportant quatre pattes de fixation. Il est monté sur l'armature mobile 2 au moyen d'un support de charge 17. Le support de charge 17 réalise la connexion mécanique entre la charge 12 et l'armature mobile 2. Le support de charge 17 se présente sous forme d'une plaque qui comporte une pluralité de zones qui sont liées mécaniquement ensemble pour former un élément monobloc ou monolithique mais tout en possédant des zones qui peuvent se déplacer les unes par rapport aux autres de manière quasi-indépendante selon la direction z. La charge 12 est fixée au support de charge 17 par des premiers points de fixation, ici sous la forme de vis 20b. Le support de charge 17 est relié mécaniquement à l'armature mobile 2 par des deuxièmes points de fixation, ici sous la forme de vis 20a.

Chaque zone possède un point de fixation du support de charge 17 avec la charge 12 et avec l'armature mobile 2. Chaque zone est séparée de la zone adjacente par une première fente traversante 18a traversante selon la direction z.

Chaque zone est avantageusement décomposée en deux zones élémentaires au moyen d'une deuxième fente 18b. Une zone élémentaire possède le point de fixation à la charge 12 tandis que l'autre zone élémentaire possède le point de fixation à l'armature mobile 2. Pour augmenter l'indépendance mécanique et un déplacement des points de fixation qui se rapproche d'une translation selon la direction z, il est avantageux de prévoir des troisièmes et préférentiellement des quatrièmes fentes 18c et 18d qui s'étendent en arc de cercle. Préférentiellement, les troisièmes et quatrièmes fentes définissent sensiblement deux cercles concentriques. Les troisièmes et quatrièmes fentes 18c, 18d s'étendent dans des directions opposées depuis les fentes 18a pour que chaque point de fixation soit relié mécaniquement à un anneau de maintien qui relie mécaniquement tous les points de fixation.

Le support de charge 17 comporte une pluralité de fentes traversantes 18a, 18b, 18c et 18d qui sont disposées pour favoriser la flexibilité du ou des points de fixation avec l'armature mobile 2 et avec l'élément réfléchissant 12 suivant la direction z lorsque le support de charge 17 est monté perpendiculairement à la direction z.

Le support de charge 17 est décomposé en une pluralité de points de fixation périphériques qui sont séparés les uns des autres par les fentes 18a qui partent de l'extrémité extérieure du support de charge et qui se dirigent vers le centre du support de charge. Le support de charge améliore la flexibilité suivant la direction z pour compenser des défauts d'hyper statisme, par exemple d'éventuelles différences de hauteur (selon la direction z) dans les points de fixation avec le dispositif réfléchissant. La fixation du support de charge 17 avec l'armature mobile 2 est assurée par les vis 20a qui passent par les trous 19a et coopèrent avec des écrous 21a. Les vis 20a assurent avantageusement la fixation des cibles 13 qui forment des écrous 21a. Les points de fixation du support miroir planaire avec le miroir 12 peuvent être des trous traversants 19b qui coopèrent avec des vis 20b et éventuellement des écrous 21b et préférentiellement des rondelles 22b.

Le support de charge 17 est formé par une plaque qui possède une forme extérieure préférentiellement sensiblement circulaire. Le support de charge 17 comporte avantageusement quatre zones distinctes qui se répètent au moyen d'une symétrie de rotation. Deux zones consécutives sont séparées par une première fente 18a qui s'étend depuis le pourtour extérieur en direction du centre du support de charge 17. Le centre du palier est avantageusement un centre de symétrie. La première fente 18 n'est pas une rainure droite mais une rainure courbée préférentiellement avec un rayon de courbure et avantageusement avec un rayon de courbure constant. Les différentes zones sont connectées mécaniquement entre elles au moyen d'un anneau de maintien. Les premières fentes 18a s'arrêtent avant l'anneau de maintien. Chaque zone comporte un point de fixation à la charge 12 et un point de fixation à l'armature mobile 2. Le support possède deux zones alignées selon la direction x et deux zones alignées selon la direction y.

Chaque zone est divisée en deux zones élémentaires qui comportent chacune une tige de fixation et/ou un trou traversant. Les deux zones élémentaires sont séparées au moyen d'une deuxième fente traversante 18b qui s'étend depuis le pourtour extérieur de la plaque vers la première fente adjacente 18a. La rainure traversante 18b est courbée avec une courbure orientée dans le même sens que les fentes 18a et possède un rayon de courbure plus important que le rayon de courbure des fentes 18a. Les deuxièmes fentes traversantes 18b et les premières fentes 18a possèdent avantageusement la même orientation de concavité. Une des zones élémentaires est fixée à l'armature mobile 2 tandis que l'autre zone élémentaire est fixée à la charge 12.

En plus des premières fentes 18a et rainures traversantes 18b, la plaque possède des troisième et quatrième séries de fentes traversantes 18c/18d. Les deux séries de fentes traversantes s'étendent autour du centre sous la forme d'arc de cercle ayant deux rayons de courbure différents. Avantageusement, les deux séries de fentes traversantes partageant le même centre. La troisième série de fentes traversantes 18c comporte une fente traversante par zone et chaque troisième fente 18c traversante s'étend depuis la première fente 18a vers la première fente 18a adjacente selon un premier sens qui est le sens horaire ou le sens antihoraire sans atteindre la première fente 18a adjacente pour conserver une zone de fixation mécanique.

La quatrième série de fentes traversantes 18d comporte une fente traversante 18d par zone et chaque quatrième fente traversante 18d s'étend depuis la première fente 18a vers la première fente 18a adjacente selon un deuxième sens qui est opposé au premier sens sans atteindre la première fente 18a adjacente pour conserver une zone de fixation mécanique.

Cette configuration de support de charge 17 autorise une déformation de chaque zone par rapport à sa zone adjacente selon la direction z ainsi que la déformation entre les deux zones élémentaires d'une même zone selon la direction z. Des défauts d'hyper statisme en particulier des différences de hauteur (selon la direction z) entre les différents éléments qui interviennent dans la fixation de l'élément réfléchissant 12 de l'armature mobile peuvent être compensées au moins en partie ce qui réduit les déformations mécaniques induites dans l'élément réfléchissant 12.

Dans la configuration illustrée, les bobines sont toutes disposées entre le plan qui contient l'armature mobile 2 et les aimants 5a/5b/5c/5d et le support 4 ce qui permet de limiter l'encombrement dans la zone supérieure de l'armature mobile 2 destinée à être fonctionnalisée avec un dispositif réfléchissant ou un autre élément. A l'inverse de la configuration proposée dans la publication « Modeling and Analysis of a Novel Two-Axis Rotary Electromagnetic Actuator for Fast Steering Mirror » de Yongjun Long précitée, la partie mobile n'est pas disposée dans une cuvette formée par les bobines qui entourent le miroir. La configuration illustrée permet de réaliser des courses angulaires plus importantes.

Dans le mode de réalisation illustré à la figure 5, le support 4 est ajouré en son centre pour faire ressortir les fils des bobines d'actionnement 9a-9d. Les ailes 3a-3d s'étendent toujours depuis le support 4. Les ailes sont fixées sur le support 4 pour former un élément monobloc. Les bobines 9a, 9b, 9c et 9d sont logées dans un barillet 16 et sont noyées dans de la résine 15 pour faciliter l'évacuation de chaleur. Le support 4 et les ailes 3a-3d sont fixés à un premier élément de boitier 23a. Les bobines 9a-9d sont montées fixement dans le barillet 16 et rendues solidaires via la résine 15 avec un deuxième élément de boitier 23b fixé au premier élément de boitier 23a. Préférentiellement, le barillet 16 et le boitier 23b forment une pièce monolithique.

Un troisième élément de boitier 23c est fixé sur le deuxième élément de boitier 23b. Le deuxième élément de boitier définit une platine 24 sur laquelle est fixé le guide 11 au moyen d'une vis 25 ou de tout autre élément de fixation. L'armature mobile 2 est fixée à la platine 24 au moyen du guide 11 et d'une pluralité de vis 20a. Le guide 11 est monté fixe sur le stator 1 au moyen d'une platine 24 fixée à un boitier 23c ou qui fait partie du boitier 23.

Un miroir 12 est monté sur une première face de l'armature mobile 2 à l'aide du support de charge 17. Des cibles 13 sont également montées sur la première face de l'armature mobile 2 autour du miroir 12, par exemple à l'extrémité des vis 20a. Des sondes de capteurs 14, avantageusement par courant de Foucault, sont montées sur ou intégrées dans un circuit imprimé annulaire (PCB) qui fait face aux cibles 13. L'avantage à disposer les quatre sondes dans un seul PCB est d'augmenter la reproductibilité des sondes et de faciliter leur montage et leur interconnexion, et de réduire les coûts. Les sondes sont avantageusement des serpentins en matériau conducteur formés sur le circuit électronique.

Le circuit PCB est fixé à une quatrième partie de boitier 23d fixée à la deuxième partie de boitier 23b au moyen de la troisième partie de boitier 23c. Les capteurs 14 sont montés fixes par rapport au boitier et au stator 1. La quatrième partie de boitier 23d définit un trou traversant en vis-à-vis de l'élément réfléchissant selon la direction z pour laisser passer le rayonnement électromagnétique.

Le sous-ensemble incluant le boitier 23c, la platine 24, la vis 25, le guide 11, l'armature mobile 2, le support de charge 17, les cibles 13, le miroir 12 forme une tête optique amovible du boitier 23b et du boitier 23d, ce qui facile son contrôle et son montage dans l'actionneur, réduisant ainsi les coûts.

L'actionneur magnétique comporte ou est associé à un circuit de commande, par exemple celui illustré à la figure 7. Le circuit de commande possède une ou plusieurs entrées destinées à recevoir des consignes sur la rotation à appliquer sur l'armature mobile 2, par exemple les signaux Cx et Cy. Le circuit de commande peut posséder une entrée destinée à recevoir les informations relatives à la rotation autour de la direction x (Cx) et une entrée destinée à recevoir les informations relatives à la rotation autour de la direction y (Cy). En fonction des informations reçues, le circuit de commande applique un premier courant Ix sur une ou une première paire de bobines pour entrainer la rotation autour de la direction x et il applique un deuxième courant Iy pour entrainer la rotation autour de la direction y avec une deuxième ou une deuxième paire de bobines. L'intensité du premier courant Ix et son sens de circulation sont définis selon la rotation recherchée. L'intensité du deuxième courant Iy et son sens de circulation sont définis selon la rotation recherchée. Par exemple, pour alimenter la première bobine 9a ou les deux bobines 9a/9b, il est possible d'utiliser un premier amplificateur 27 asservi en courant. Il peut en être de même pour alimenter la troisième bobine 9c ou les deux bobines 9c/9d, avec un deuxième amplificateur 27 asservi en courant.

Comme indiqué, il est avantageux de recevoir une première information à partir des capteurs 14a/14b afin d'évaluer la rotation effective de l'armature mobile 2 autour d'un premier axe de rotation et si nécessaire ajuster la valeur du courant pour obtenir l'angle d'inclinaison recherché. Une deuxième information peut être utilisée à partir d'un second couple de capteurs pour suivre la rotation selon l'axe de rotation et ajuster la valeur du courant appliqué. Le circuit de commande peut posséder des troisième et quatrième entrées connectées aux premiers et seconds couples de capteurs pour recevoir les signaux représentatifs des rotations effectives S1 et S2. Il est également possible de prévoir que le circuit de commande possède des première et deuxième entrées supplémentaires destinées à être connectées à un capteur externe, par exemple un capteur optique qui reçoit le flux réfléchi par le dispositif réfléchissant. L'information du capteur externe est utilisée pour asservir la position angulaire statique et/ou dynamique de l'armature mobile. Le capteur externe permet de réaliser un asservissement de la position de l'armature mobile 2 lorsque l'actionneur coopère avec un élément mobile par rapport à l'actionneur. Le capteur externe peut émettre les signaux SE1 et SE2 représentatifs des rotations effectives ou de la rotation à réaliser pour maintenir le faisceau lumineux dans la position recherchée.

Le circuit de commande peut être pourvu d'un circuit d'amortissement qui permet d'amortir électriquement les mouvements de l'actionneur lorsque ce dernier n'est pas alimenté. Le circuit d'amortissement forme un circuit de type RLC avec la ou les bobines.

Un premier commutateur 26 est monté afin de connecter la ou les bobines intervenant dans la rotation autour de la direction y soit à une source de courant soit au circuit d'amortissement. Le circuit d'amortissement possède une charge électrique avantageusement, formée d'une résistance R montée préférentiellement en série avec un condensateur électrique C. Le circuit d'amortissement est connecté via une première borne à la ou aux bobines et à un potentiel fixe via une deuxième borne, par exemple la masse.

Un deuxième commutateur 26 peut être monté pour connecter la ou les bobines intervenant dans la rotation autour de la direction x soit à une source de courant soit au circuit d'amortissement. Le circuit d'amortissement possède une charge électrique avantageusement, formée d'une résistance montée en série avec un condensateur électrique. Le circuit d'amortissement est connecté via une première borne à la ou aux bobines et à un potentiel fixe via une deuxième borne, par exemple la masse. Les deux commutateurs peuvent fonctionner indépendamment au moyen des signaux Dx et Dy appliqués sur leur électrode de commande.

Ce circuit d'amortissement permet d'amortir les vibrations induites à la résonance du mécanisme. Lorsque le mécanisme est soumis à des vibrations externes ou des chocs, tels que rencontrés en systèmes embarqués, par exemple dans les satellites lors des phases de lancement, la résonance mécanique du mécanisme, formée par le moment d'inertie et la raideur en rotation de l'armature mobile est excitée. Cette résonance tend à faire osciller l'armature mobile 2 incluant le miroir ce qui n'est pas souhaitable. Grâce aux aimants 5a, 5b, 5c, 5d, le mouvement vibratoire oscillant de l'armature mobile 2 génère les variations de flux dans le circuit statorique qui se traduisent par des variations de tension aux bornes des bobines 9a, 9b, 9c, 9d. Si le circuit électrique amortissant est connecté, ces variations de tension génèrent des variations de courant Ix et Iy qui permettent de dissiper électriquement l'énergie électrique dans la résistance R. Cet amortissement électrique permet de limiter l'amplitude du mouvement vibratoire oscillant de l'armature mobile 2.

## Revendications

1. Actionneur magnétique comprenant un stator (1) et une armature mobile (2) montée pivotante par rapport au stator (1),
dans lequel le stator (1) est muni :
- d'une culasse statorique (3) réalisée en matériau magnétique et comportant des première et deuxième ailes (3a, 3b) reliées par un support (4), la première aile (3a) et la deuxième aile (3b) s'étendant principalement selon une première direction (z) depuis le support (4),
- d'un premier aimant (5a) monté sur une extrémité de la première aile (3a),
- d'un deuxième aimant (5b) monté sur une extrémité de la deuxième aile (3b), les premier et deuxième aimants (5a, 5b) étant à aimantation axiale avec une direction d'aimantation dirigée selon la première direction (z) et de même sens, les premier et deuxième aimants (5a, 5b) étant alignés selon une deuxième direction (x) perpendiculaire à la première direction (z), les premier et deuxième aimants (5a et 5b) étant disposés dans le prolongement des première et deuxième ailes (3a, 3b) selon la première direction (z),
- au moins une première bobine (9a, 9b) montée autour de la première aile (3a) entre le support (4) et le premier aimant (5a),
dans lequel l'armature mobile (2) est disposée entre les premier et deuxième aimants (5a, 5b) selon la deuxième direction (x) et possède des dimensions selon la deuxième direction (x) et selon une troisième direction (y) chacune supérieure à la dimension de l'armature mobile selon la première direction (z), la troisième direction (y) étant perpendiculaire aux première et deuxième directions (z, x), l'armature mobile (2) définissant un premier entrefer (6a) avec l'extrémité de la première aile (3a) et le premier aimant (5a) et un deuxième entrefer (6b) avec l'extrémité de la deuxième aile (3b) et le deuxième aimant (5b), et possédant des première et deuxième extrémités (2a, 2b) opposées selon la deuxième direction (x),
dans lequel un guide (11) relie mécaniquement l'armature mobile (2) avec le stator (1), le guide (11) étant configuré pour autoriser le pivotement de l'armature mobile (2) autour d'un premier axe de rotation parallèle à la troisième direction (y), et empêcher le déplacement de l'armature mobile (2) selon la deuxième direction (x) vers le premier aimant (5a) ou le deuxième aimant (5b),
dans lequel le premier aimant (5a) est couplé magnétiquement avec la première extrémité (2a) de l'armature mobile (2) et la première aile (3a) pour former un premier circuit magnétique statique (8a),
dans lequel le deuxième aimant (5b) est couplé magnétiquement avec la deuxième extrémité (2a) de l'armature mobile (2) et la deuxième aile (3a) pour former un deuxième circuit magnétique statique (8b), et
dans lequel la première bobine (9a) est couplée magnétiquement aux première et deuxième extrémités (2a, 2b) de l'armature mobile (2), aux première et deuxième ailes (3a, 3b) et au support (4) pour former un premier circuit magnétique dynamique.

2. Actionneur magnétique selon la revendication 1, dans lequel le rapport entre l'épaisseur des premier et deuxième aimants (5a, 5b) et l'épaisseur de l'armature mobile (2) est compris entre 0,8 et 1,2, l'épaisseur étant mesurée selon la première direction (z) et/ou un plan médian des premier et deuxième aimants (5a, 5b) selon la première direction (z) est un plan médian de l'armature mobile (2).

3. Actionneur magnétique selon l'une des revendications 1 et 2, dans lequel la distance minimale entre le premier aimant (5a) et l'armature mobile (2) est supérieure ou égale à la distance minimale entre la première aile (3a) et l'armature magnétique mobile (2).

4. Actionneur magnétique selon l'une des revendications précédentes, dans lequel le guide (11) est fixé au stator (1) par au moins un premier point de fixation (25) et est fixé à l'armature mobile (2) par une pluralité de deuxièmes points de fixation (20a), dans lequel le guide (11) comporte un corps définissant des fentes traversantes selon la première direction (z), les fentes traversantes se présentent sous la forme de spirales dirigées vers le au moins un premier point de fixation (25) et dans lequel les fentes traversantes séparent le au moins un premier point de fixation (25) et la pluralité de deuxièmes points de fixation (20a) selon la deuxième direction (x) et/ou la troisième direction (y).

5. Actionneur magnétique selon l'une quelconque des revendications précédentes, comportant des troisième et quatrième aimants (5c, 5d) montés respectivement sur des troisième et quatrième ailes (3c, 3d) de la culasse statorique (3), les troisième et quatrième aimants (5c, 5d) étant à aimantation axiale avec une direction d'aimantation parallèle à la première direction (z) et étant alignés selon la troisième direction (y), l'armature mobile (2) possédant des troisième et quatrième extrémités (2c, 2d) opposées selon la troisième direction (y) séparée des extrémités des troisième et quatrième ailes (3c, 3d) et des troisième et quatrième aimants (5c, 5d) par un troisième et un quatrième entrefers (6c, 6d), l'armature magnétique mobile (2) étant disposée entre les troisième et quatrième aimants (5c, 5d) selon la troisième direction (y), dans lequel
- le troisième aimant (5c) forme un troisième circuit magnétique statique avec une troisième extrémité (2c) de l'armature mobile (2) et la troisième aile (3c),
- le quatrième aimant (5d) forme un quatrième circuit magnétique statique avec une quatrième extrémité (2d) de l'armature mobile (2) et la quatrième aile (3d),
et dans lequel une bobine additionnelle (9c, 9d) forme un circuit magnétique dynamique additionnel avec les troisième et quatrième extrémités (2c, 2d), les troisième et quatrième ailes (3c, 3d) et le support (4).

6. Actionneur magnétique selon la revendication précédente, dans lequel l'aimantation des premier et deuxième aimants (5a, 5b) est selon un premier sens d'aimantation et dans lequel l'aimantation des troisième et quatrième aimants (5c, 5d) est selon un deuxième sens d'aimantation opposé au premier sens d'aimantation ou dans lequel les premier, deuxième, troisième et quatrième aimants (5a, 5b, 5c, 5d) possèdent une aimantation selon un même sens d'aimantation.

7. Actionneur magnétique selon l'une des revendications précédentes, dans lequel l'armature magnétique (2) possède au moins une cible (13a, 13b) coopérant avec au moins une sonde (14a, 14b) de capteur de courant de Foucault pour détecter le débattement de l'armature magnétique (2) autour du premier axe de rotation, la au moins une cible (13a, 13b) et la au moins une sonde (14a, 14b) de capteur de courant de Foucault étant séparées de la au moins une première bobine (9a, 9b) et du support (4) par l'armature magnétique (2).

8. Actionneur magnétique selon l'une quelconque des revendications 5 à 7, dans lequel l'armature mobile (2) possède deux paires de cibles (13a, 13b) montées fixes sur l'armature mobile (2) alignées respectivement selon la première direction (x) et selon la deuxième direction (y), dans lequel le stator (1) comporte deux paires sondes de capteurs de courant de Foucault (14a, 14b) pour détecter la rotation de l'armature magnétique (2) autour du premier axe de rotation et du deuxième axe de rotation par mode différentiel et dans lequel, les deux paires sondes de capteurs de courant de Foucault (14a, 14b) sont formées par des serpentins en matériau conducteur sur un circuit imprimé électronique annulaire.

9. Actionneur magnétique selon l'une des revendications précédentes, dans lequel une charge (12) est fixée sur une première face principale de l'armature mobile (2), la charge (12) étant séparée de la première bobine (9a) et des deuxième, troisième et quatrième bobines (9b, 9c, 9d) le cas échéant par l'armature mobile (2).

10. Actionneur magnétique selon la revendication précédente **caractérisé en ce que** la charge (12) est reliée mécaniquement à l'armature magnétique (2) au moyen d'un support de charge (17), la charge (12) étant fixée au support de charge (17) par des premiers points de fixation, le support de charge (17) étant relié mécaniquement au stator (1) par des deuxièmes points de fixation,
le support de charge (17) étant formé par une plaque définissant quatre premières fentes (18a) traversantes selon la première direction (z), les premières fentes (18a) s'étendant depuis la périphérie du support de charge (17) vers le centre du support de charge (17) selon une première trajectoire courbe avec une première concavité pour définir quatre zones, et définissant au moins des troisièmes fentes (18c, 18d) s'étendant en arc de cercle autour du centre à partir des premières fentes (18a).

11. Actionneur magnétique selon la revendication précédente, dans lequel le support de charge (17) comporte quatre deuxièmes fentes (18b) traversantes selon la première direction (z), les deuxièmes fentes (18b) s'étendant depuis la périphérie du support de charge (17) vers les premières fentes (18a) selon une deuxième trajectoire courbe avec la première concavité, chaque zone comportant une deuxième fente (18b) pour définir deux zones élémentaires dans chaque zone, les premiers et les deuxièmes points de fixation étant disposés en alternance, un premier point de fixation ou un deuxième point de fixation séparant une première fente (18a) et une deuxième fente (18b) consécutive, les troisièmes fentes (18c, 18d) s'étendant entre le centre et les deuxième fentes (18b).

12. Actionneur magnétique selon l'une des revendications 10 et 11, dans lequel le guide (11) est fixé sur la première face principale de l'armature mobile (2) et le support de charge (17) est fixé sur la deuxième face principale de l'armature mobile (2).

13. Actionneur magnétique selon la revendication précédente, dans lequel le guide (11) est fixé au support de charge (17) par des vis (20a) passant au travers de trous traversants de l'armature mobile (2).

14. Actionneur magnétique selon la revendication précédente en combinaison avec la revendication 7, dans lequel la au moins une cible (13a, 13b) est montée sur une des vis (20a).

15. Actionneur magnétique selon l'une des revendications précédentes, dans lequel la charge est un élément réfléchissant (12) et préférentiellement dans un actionneur selon la revendication 9, l'élément réfléchissant (12) est monté à l'intérieur du circuit électronique annulaire.

16. Système mécatronique comportant un actionneur magnétique selon l'une des revendications précédentes **caractérisé en ce qu'**il comporte un circuit de commande définissant un premier circuit d'alimentation de au moins la première bobine ou un circuit électrique d'amortissement connecté au moins aux bornes de la première bobine (9a), le circuit électrique d'amortissement incluant une résistance et une capacité pour former un circuit RLC.

## Patentansprüche

1. Magnetisches Stellglied, umfassend einen Stator (1) und einem beweglichen Anker (2), der in Bezug auf den Stator (1) schwenkbar angebracht ist, wobei der Stator (1) versehen ist mit:
- einem Statorjoch (3), das aus magnetischem Material hergestellt ist und einen ersten und einen zweiten Flügel (3a, 3b) aufweist, die durch einen Träger (4) verbunden sind, wobei der erste Flügel (3a) und der zweite Flügel (3b) sich vom Träger (4) aus hauptsächlich in einer ersten Richtung (z) erstrecken,
- einem ersten Magneten (5a), der an einem Ende des ersten Flügels (3a) angebracht ist,
- einem zweiten Magneten (5b), der an einem Ende des zweiten Flügels (3b) angebracht ist, wobei der erste und der zweite Magnet (5a, 5b) eine axiale Magnetisierung aufweisen, deren Magnetisierungsrichtung in der ersten Richtung (z) gerichtet ist und die gleiche Richtung hat, der erste und der zweite Magnet (5a, 5b) in einer zweiten Richtung (x), die senkrecht zur ersten Richtung (z) steht, ausgerichtet sind, wobei der erste und der zweite Magnet (5a, 5b) in der Verlängerung des ersten und des zweiten Flügels (3a, 3b) in der ersten Richtung (z) angeordnet sind,
- mindestens einer ersten Spule (9a, 9b), die zwischen dem Träger (4) und dem ersten Magneten (5a) um den ersten Flügel (3a) herum montiert ist,
wobei der bewegliche Anker (2) in der zweiten Richtung (x) zwischen dem ersten und dem zweiten Magneten (5a, 5b) angeordnet ist und in der zweiten Richtung (x) und in einer dritten Richtung (y) Abmessungen aufweist, die jeweils größer als die Abmessung des beweglichen Ankers in der ersten Richtung (z) sind, wobei die dritte Richtung (y) senkrecht zur ersten und zweiten Richtung (z, x) steht, der bewegliche Anker (2) zwischen dem Ende des ersten Flügels (3a) und dem ersten Magneten (5a) einen ersten Luftspalt (6a) und zwischen dem Ende des zweiten Flügels (3b) und dem zweiten Magneten (5b) einen zweiten Luftspalt (6b) definiert und ein erstes und ein zweites Ende (2a, 2b) aufweist, die in der zweiten Richtung (x) entgegengesetzt sind,
wobei eine Führung (11) den beweglichen Anker (2) mechanisch mit dem Stator (1) verbindet, die Führung (11) dazu konfiguriert ist, ein Schwenken des beweglichen Ankers (2) um eine erste Drehachse parallel zur dritten Richtung (y) zuzulassen und eine Bewegung des beweglichen Ankers (2) in der zweiten Richtung (x) zum ersten Magneten (5a) oder zweiten Magneten (5b) hin zu verhindern,
wobei der erste Magnet (5a) mit dem ersten Ende (2a) des beweglichen Ankers (2) und dem ersten Flügel (3a) magnetisch gekoppelt ist, um einen ersten statischen Magnetkreis (8a) zu bilden,
wobei der zweite Magnet (5b) mit dem zweiten Ende (2a) des beweglichen Ankers (2) und dem zweiten Flügel (3a) magnetisch gekoppelt ist, um einen zweiten statischen Magnetkreis (8b) zu bilden, und
wobei die erste Spule (9a) mit dem ersten und dem zweiten Ende (2a, 2b) des beweglichen Ankers (2), dem ersten und dem zweiten Flügel (3a, 3b) und dem Träger (4) magnetisch gekoppelt ist, um einen ersten dynamischen Magnetkreis zu bilden.

2. Magnetisches Stellglied nach Anspruch 1, wobei das Verhältnis der Dicke des ersten und des zweiten Magnets (5a, 5b) zur Dicke des beweglichen Ankers (2) zwischen 0,8 und 1,2 liegt, die Dicke in der ersten Richtung (z) gemessen wird und/oder eine Mittelebene des ersten und des zweiten Magnets (5a, 5b) in der ersten Richtung (z) eine Mittelebene des beweglichen Ankers (2) ist.

3. Magnetisches Stellglied nach einem der Ansprüche 1 und 2, wobei der Mindestabstand zwischen dem ersten Magneten (5a) und dem beweglichen Magnetanker (2) größer oder gleich dem Mindestabstand zwischen dem ersten Flügel (3a) und dem beweglichen Magnetanker (2) ist.

4. Magnetisches Stellglied nach einem der vorherigen Ansprüche, wobei die Führung (11) durch mindestens einen ersten Befestigungspunkt (25) am Stator (1) befestigt ist und durch eine Vielzahl von zweiten Befestigungspunkten (20a) am beweglichen Anker (2) befestigt ist, wobei die Führung (11) einen Körper umfasst, der in der ersten Richtung (z) durchgehende Schlitze definiert, die durchgehenden Schlitze die Form von Spiralen haben, die zum mindestens einen ersten Befestigungspunkt (25) hin gerichtet sind, und wobei die durchgehenden Schlitze den mindestens einen ersten Befestigungspunkt (25) und die Vielzahl von zweiten Befestigungspunkten (20a) in der zweiten Richtung (x) und/oder der dritten Richtung (y) trennen.

5. Magnetisches Stellglied nach einem der vorherigen Ansprüche, umfassend einen dritten und einen vierten Magneten (5c, 5d), die jeweils an einem dritten und einem vierten Flügel (3c, 3d) des Statorjochs (3) angebracht sind, wobei der dritte und der vierte Magnet (5c, 5d) eine axiale Magnetisierung aufweisen, deren Magnetisierungsrichtung parallel zur ersten Richtung (z) ist, und in der dritten Richtung (y) ausgerichtet sind, der bewegliche Anker (2) ein drittes und ein viertes Ende (2c, 2d) aufweist, die in der dritten Richtung (y) entgegengesetzt sind und durch einen dritten und einen vierten Luftspalt (6c, 6d) von den Enden des dritten und vierten Flügels (3c, 3d) und den dritten und des vierten Magneten (5c, 5d) getrennt sind, der bewegliche Magnetanker (2) in der dritten Richtung (y) zwischen dem dritten und dem vierten Magneten (5c, 5d) angeordnet ist, wobei
- der dritte Magnet (5c) mit einem dritten Ende (2c) des beweglichen Magnetankers (2) und dem dritten Flügel (3c) einen dritten statischen Magnetkreis bildet,
- der vierte Magnet (5d) mit einem vierten Ende (2d) des beweglichen Ankers (2) und dem vierten Flügel (3d) einen vierten statischen Magnetkreis bildet, und wobei eine zusätzliche Spule (9c, 9d) mit dem dritten und dem vierten Ende (2c, 2d), dem dritten und dem vierten Flügel (3c, 3d) und dem Träger (4) einen zusätzlichen dynamischen Magnetkreis bildet.

6. Magnetisches Stellglied nach dem vorherigen Anspruch, wobei die Magnetisierung des ersten und des zweiten Magnets (5a, 5b) in einer ersten Magnetisierungsrichtung erfolgt und wobei die Magnetisierung des dritten und des vierten Magnets (5c, 5d) in einer zweiten Magnetisierungsrichtung erfolgt, die der ersten Magnetisierungsrichtung entgegengesetzt ist, oder wobei der erste, der zweite, der dritte und vierte Magnet (5a, 5b, 5c, 5d) eine Magnetisierung in einer gleichen Magnetisierungsrichtung aufweisen.

7. Magnetisches Stellglied nach einem der vorherigen Ansprüche, wobei der Magnetanker (2) mindestens ein Ziel (13a, 13b) aufweist, das mit mindestens einer Wirbelstromsonde (14a, 14b) zusammenwirkt, um den Schwenkbereich des Magnetankers (2) um die erste Drehachse zu erfassen, wobei das mindestens eine Ziel (13a, 13b) und die mindestens eine Wirbelstromsonde (14a, 14b) durch den Magnetanker (2) von der mindestens einen ersten Spule (9a, 9b) und dem Träger (4) getrennt sind.

8. Magnetisches Stellglied nach einem der Ansprüche 5 bis 7, wobei der bewegliche Anker (2) zwei Ziel-Paare (13a, 13b) aufweist, die auf dem beweglichen Anker (2) fest angebracht sind und jeweils in der ersten Richtung (x) und in der zweiten Richtung (y) ausgerichtet sind, wobei der Stator (1) zwei Wirbelstromsensor-Paare (14a, 14b) aufweist, um die Drehung des Magnetankers (2) um die erste Drehachse und die zweite Drehachse im Differenzbetrieb zu erfassen, und wobei die zwei Wirbelstromsensor-Paare (14a, 14b) durch Wicklungen aus leitfähigem Material auf einer ringförmigen elektronischen Leiterplatte gebildet sind.

9. Magnetisches Stellglied nach einem der vorherigen Ansprüche, wobei auf einer ersten Hauptfläche des beweglichen Ankers (2) eine Last (12) befestigt ist, wobei die Last (12) durch den beweglichen Anker (2) von der ersten Spule (9a) und gegebenenfalls von der zweiten, dritten und vierten Spule (9b, 9c, 9d) getrennt ist.

10. Magnetisches Stellglied nach dem vorherigen Anspruch, **dadurch gekennzeichnet, dass** die Last (12) durch einen Lastträger (17) mit dem Magnetanker (2) mechanisch verbunden ist, wobei die Last (12) durch erste Befestigungspunkte am Lastträger (17) befestigt ist und der Lastträger (17) durch zweite Befestigungspunkte mit dem Stator (1) mechanisch verbunden ist,
wobei der Lastträger (17) durch eine Platte gebildet wird, die in der ersten Richtung (z) vier erste durchgehende Schlitze (18a) definiert, die ersten Schlitze (18a) sich in einer ersten gekrümmten Bahn mit einer ersten Konkavität vom Umfang des Lastträgers (17) zum Zentrum des Lastträgers (17) hin erstrecken, um vier Zonen zu definieren, und mindestens dritte Schlitze (18c, 18d) definiert, die sich von den ersten Schlitzen (18a) in einem Kreisbogen um das Zentrum herum erstrecken.

11. Magnetisches Stellglied nach dem vorherigen Anspruch, wobei der Lastträger (17) in der ersten Richtung (z) vier zweite durchgehende Schlitze (18b) aufweist, die zweiten Schlitze (18b) sich in einer zweiten gekrümmten Bahn mit der ersten Konkavität vom Umfang des Lastträgers (17) zu den ersten Schlitzen (18a) hin erstrecken, jede Zone einen zweiten Schlitz (18b) umfasst, um in jeder Zone zwei Elementarzonen zu definieren, die ersten und die zweiten Befestigungspunkte alternierend angeordnet sind, ein erster Befestigungspunkt oder ein zweiter Befestigungspunkt einen ersten Schlitz (18a) und einen darauf folgenden zweiten Schlitz (18b) trennt, die dritten Schlitze (18c, 18d) sich zwischen dem Zentrum und den zweiten Schlitzen (18b) erstrecken.

12. Magnetisches Stellglied nach einem der Ansprüche 10 und 11, wobei die Führung (11) auf der ersten Hauptfläche des beweglichen Ankers (2) befestigt ist und der Lastträger (17) auf der zweiten Hauptfläche des beweglichen Ankers (2) befestigt ist.

13. Magnetisches Stellglied nach dem vorherigen Anspruch, wobei die Führung (11) durch Schrauben (20a), die durch Durchgangslöcher des beweglichen Ankers (2) hindurch gehen, am Lastträger (17) befestigt ist.

14. Magnetisches Stellglied nach dem vorherigen Anspruch in Verbindung mit Anspruch 7, wobei das mindestens eine Ziel (13a, 13b) an einer der Schrauben (20a) angebracht ist.

15. Magnetisches Stellglied nach einem der vorherigen Ansprüche, wobei die Last ein reflektierendes Element (12) ist und das reflektierende Element (12) in einem Stellglied nach Anspruch 9 bevorzugt innerhalb der ringförmigen elektronischen Schaltung angebracht ist.

16. Mechatronisches System, umfassend ein magnetisches Stellglied nach einem der vorherigen Ansprüche, **dadurch gekennzeichnet, dass** es eine Steuerschaltung umfasst, die eine ersten Schaltung zur Stromversorgung mindestens der ersten Spule oder eine elektrische Dämpfungsschaltung definiert, die mindestens mit den Anschlüssen der ersten Spule (9a) verbunden ist, wobei die elektrische Dämpfungsschaltung einen Widerstand und eine Kapazität umfasst, um eine RLC-Schaltung zu bilden.

## Claims

1. Magnetic actuator comprising a stator (1) and a movable armature (2) mounted swivelling with respect to the stator (1),
wherein the stator (1) is provided with:
- a stator core (3) made from magnetic material and comprising first and second flanges (3a, 3b) connected by a support (4), the first flange (3a) and the second flange (3b) extending mainly along a first direction (z) from the support (4),
- a first magnet (5a) fitted on one end of the first flange (3a),
- a second magnet (5b) fitted on one end of the second flange (3b), the first and second magnets (5a, 5b) having an axial magnetisation with a magnetisation axis directed in the first axis (z) and with the same direction, the first and second magnets (5a, 5b) being aligned in a second axis (x) perpendicular to the first axis (z), the first and second magnets (5a and 5b) being arranged in the extension of the first and second flanges (3a, 3b) along the first axis (z),
- at least a first coil fitted (9a, 9b) around the first flange (3a) between the support (4) and the first magnet (5a),
wherein the movable armature (2) is arranged between the first and second magnets (5a, 5b) in the second axis (x) and has dimensions in the second axis (x) and in a third axis (y) that are each larger than a dimension of the movable armature (2) in the first axis (z), the third axis (y) being perpendicular to the first axis (z) and second axis (x), the movable armature (2) defining a first air-gap (6a) with the end of the first flange (3a) and with the first magnet (5a) and defining a second air-gap (6b) with the end of the second flange (3b) and with the second magnet (5b), and having opposite first and second ends (2a, 2b) along the second axis (x),
wherein a guide (11) mechanically connects the movable armature (2) with the stator (1), the guide (11) being configured to allow swivelling of the movable armature (2) around a first axis of rotation parallel to the third axis (y) and to prevent movement of the movable armature (2) in the second axis (x) towards the first magnet (5a) and the second magnet (5b),
wherein the first magnet (5a) is magnetically coupled with the first end (2a) of the movable armature (2) and the first flange (3a) to form a first static magnetic circuit (8a),
wherein the second magnet (5b) is magnetically coupled with the second end (2a) of the movable armature (2) and the second flange (3a) to form a second static magnetic circuit (8b), and
wherein the first coil (9a) is magnetically coupled with the first and second ends (2a, 2b) of the movable armature (2), with the first and second flanges (3a, 3b) and with the support (4) to form a first dynamic magnetic circuit.

2. Magnetic actuator according to claim 1, wherein the ratio between the thickness of the first and second magnets (5a, 5b) and the thickness of the movable armature (2) is comprised between 0.8 and 1.2, the thicknesses being measured along the first axis (z) and/or a mid-plane of the first and second magnets (5a, 5b) in the first axis (z) is a mid-plane of the movable armature (2).

3. Magnetic actuator according to claim 1 or 2, wherein the minimum distance between the first magnet (5a) and the movable armature (2) is greater than or equal to the minimum distance between the first flange (3a) and the movable armature (2).

4. Magnetic actuator according to one of the foregoing claims, wherein the guide (11) is fixed to the stator (1) via at least a first attachment point (25) and is fixed to the movable armature (2) via a plurality of second attachment points (20a), wherein the guide (11) comprises a body defining through slots in the first axis (z), the through slots being in the form of spirals directed towards the at least a first attachment point (25) and wherein the through slots separate the at least a first attachment point (25) and the plurality of second attachment points (20a) in the second axis (x) and/or the third axis (y).

5. Magnetic actuator according to one of the foregoing claims, comprising third and fourth magnets (5c, 5d) respectively fitted on third and fourth flanges (3c, 3d) of the stator core (3), the third and fourth magnets (5c, 5d) having an axial magnetisation with a magnetisation axis parallel to the first axis (z) and being aligned in the third axis (y), the movable armature (2) having opposite third and fourth ends (2c, 2d) in the third axis (y) separated from ends of the third and fourth flanges (3c, 3d) and from the third and fourth magnets (5c, 5d) by a third air-gap (6c) and fourth air-gap (6d), the movable armature (2) being arranged between the third and fourth magnets (5c, 5d) in the third axis (y), wherein
- the third magnet (5c) forms a third static magnetic circuit with the third end (2c) of the movable armature (2) and the third flange (3c),
- the fourth magnet (5d) forms a fourth static magnetic circuit with the fourth end (2d) of the movable armature (2) and the fourth flange (3d),
and wherein an additional coil (9c, 9d) forms an additional dynamic magnetic circuit with the third and fourth ends (2c, 2d), the third and fourth flanges (3c, 3d) and the support (4).

6. Magnetic actuator according to the preceding claim, wherein magnetisation of the first and second magnets (5a, 5b) is in a first magnetisation direction and wherein magnetisation of the third and fourth magnets (5c, 5d) is in a second magnetisation direction opposite to the first magnetisation direction or wherein the first, second, third and fourth magnets (5a, 5b, 5c, 5d) have a magnetisation in the same magnetisation direction.

7. Magnetic actuator according to one of the foregoing claims, wherein the movable armature (2) has at least one target (13a, 13b) collaborating with at least one Eddy current sensor probe (14a, 14b) to detect movement of the movable armature (2) around the first axis of rotation, the at least one target (13a, 13b) and the at least one Eddy current sensor probe (14a, 14b) being separated from the at least a first coil (9a, 9b) and from the support (4) by the movable armature (2).

8. Magnetic actuator according to any one of claims 5 to 7, wherein the movable armature (2) has two pairs of targets (13a, 13b) mounted fixed on the movable armature (2) and aligned respectively in the first axis (x) and in the second axis (y), wherein the stator (1) comprises two pairs of Eddy current sensor probes (14a, 14b) to detect rotation of the movable armature (2) around the first axis of rotation and the second axis of rotation by differential mode, and wherein the two pairs of Eddy current sensor probes (14a, 14b) are formed by coils made from conducting material on an annular electronic printed circuit board.

9. Magnetic actuator according to one of the foregoing claims, wherein a load (12) is fixed on a first main surface of the movable armature (2), the load (12) being separated from the first coil (9a) and from the second, third and fourth coils (9b, 9c, 9d) if applicable by the movable armature (2).

10. Magnetic actuator according to the preceding claim, **characterised in that** the load (12) is mechanically connected to the movable armature (2) by means of a load support (17), the load (12) being fixed to the load support (17) via first attachment points, the load support (17) being mechanically connected to the stator (1) via second attachment points,
the load support (17) being formed by a plate defining four first slots (18a) passing through the plate along the first axis (z), the first slots (18a) extending from a periphery of the load support (17) in a direction toward a centre of the load support (17) following a first curved path with a first concaveness to define four areas, and defining at least third slots (18c, 18d) extending in an arc of a circle around the centre starting from the first slots (18a).

11. Magnetic actuator according to the preceding claim, wherein the load support (17) comprises four second slots (18b) passing through the plate along the first axis (z), the second slots (18b) extending from the periphery of the load support (17) in a direction toward the first slots (18a) following a second curved path with a first concaveness, each area comprising a second slot (18b) to define two elementary areas in each area, the first and second attachment points being arranged alternately, a first attachment point or a second attachment point separating a first slot (18a) and a consecutive second slot (18b), the third slots (18c, 18d) extending between the centre and the second slots (18b).

12. Magnetic actuator according to claim 10 or 11, wherein the guide (11) is fixed on a first main surface of the movable armature (2) and the load support (17) is fixed on a second main surface of the movable armature (2).

13. Magnetic actuator according to the preceding claim, wherein the guide (11) is fixed to the load support (17) by screws (20a) passing through pass-through holes of the movable armature (2).

14. Magnetic actuator according to the preceding claim in combination with claim 7, wherein the at least one target (13a, 13b) is fitted on one of the screws (20a).

15. Magnetic actuator according to any one of the preceding claims, wherein the load is a reflecting element (12), and preferentially in an actuator according to claim 9, the reflecting element (12) is fitted inside the annular electronic circuit.

16. Mechatronic system comprising a magnetic actuator according to any one of the preceding claims, **characterised in that** it comprises a control circuit defining a first power supply circuit of at least the first coil or an electric damping circuit connected at least to the terminals of the first coil (9a), the electric damping circuit including a resistor and a capacitor to form an RLC circuit.
